# EUROPÄISCHE PATENTSCHRIFT

(11) **EP 3 724 043 B1**
(45) Veröffentlichungstag und Bekanntmachung des Hinweises auf die Patenterteilung: **14.06.2023**
(21) Anmeldenummer: 18833844.6
(22) Anmeldetag: 13.12.2018
(51) Int. Cl.: B60T 8/88, B60T 13/66, B62D 9/00

(54) **ELEKTRISCHE AUSRÜSTUNG EINES FAHRZEUGS MIT REDUNDANTER ABS- UND FAHRERDYNAMIKREGELUNG**
ELECTRICAL EQUIPMENT OF A VEHICLE HAVING REDUNDANT ABS AND DRIVING DYNAMICS CONTROL
ÉQUIPEMENT ÉLECTRIQUE D'UN VÉHICULE COMPRENANT UNE RÉGULATION DYNAMIQUE REDONDANTE DE L'ABS ET DE LA DYNAMIQUE DE CONDUITE

(30) Priorität: 15.12.2017 DE 102017011611
(43) Veröffentlichungstag der Anmeldung: 21.10.2020
(73) Patentinhaber: KNORR-BREMSE Systeme für Nutzfahrzeuge GmbH, 80809 München (DE)
(72) Erfinder: RÖTHER, Friedbert, 74389 Cleebronn (DE); HECKER, Falk, 71706 Markgröningen (DE); MUSTAPHA, Adnan, 75433 Maulbronn (DE); SCHWAB, Frank, 75249 Kieselbronn (DE); STEINBERGER, Jürgen, 82194 Gröbenzell (DE)
(86) Internationale Anmeldenummer: PCT/EP2018/084735
(87) Internationale Veröffentlichungsnummer: WO 2019/115683

(56) Entgegenhaltungen:
- US-A1- 2007 170 774
- US-A1- 2013 320 751
- US-A1- 2017 267 221

## Beschreibung

Die Erfindung betrifft eine elektrische Ausrüstung eines Fahrzeugs gemäß dem Oberbegriff von Anspruch 1 sowie ein Fahrzeug mit einer solchen elektrischen Ausrüstung gemäß Anspruch 18.

Eine solche elektrische Ausrüstung ist in DE 10 2014 112 014 A1 oder in US 2017 267221 A1 offenbart. Dort wird der Fall behandelt, dass eine pneumatische oder elektro-pneumatische Betriebsbremseinrichtung nicht nur durch eine Fahrerbremsanforderung, sondern auch automatisch durch ein Fahrerassistenzsystem wie beispielsweise einen Notbremsassistenten oder eine Abstandsfolgeregelung (ACC) betätigt werden kann. Dabei wird ein(e) erweiterte Betriebsbremsventileinrichtung oder erweitertes Fußbremsmodul mit wenigstens einem pneumatischen Kanal eingesetzt, bei dem ein Steuerkolben nicht nur durch eine erste, durch Betätigung des Fußbremspedals erzeugten Betätigungskraft belastet werden kann, sondern zusätzlich auch durch eine zweite Betätigungskraft, welche abhängig von Fahrbetriebsbedingungen auf elektronischem Wege erzeugt wird. Insbesondere ist die erweiterte Betriebsbremsventileinrichtung mit einer elektronischen Drucksteuer- oder Regeleinrichtung versehen, mit welcher unabhängig vom Fahrer der in dem wenigstens einen pneumatischen Kanal erzeugte Brems- oder Bremssteuerdruck mittels der am Steuerkolben wirkenden zweiten Betätigungskraft erhöht oder reduziert werden kann.

Dabei existieren zum Teil seit geraumer Zeit Fahrerassistenzsysteme wie Antriebsschlupfregelung (ASR), Notbremsassistent (AEBS), Abstandsfolgereglung (ACC) oder Fahrdynamikregelung (ESC), mit deren Hilfe Lenk- und/oder Bremseingriffe automatisch und unabhängig vom Fahrer erfolgen können, um Sicherheitsvorgaben wie z.B. einen gewissen Mindestabstand zu einem voraus fahrenden Fahrzeug, eine gewisse Mindestbremswirkung sowie eine gewisse Mindestfahrstabilität zu gewährleisten.

Für den zukünftigen Fahrzeugverkehr sind außerdem Konzepte geplant, die es ermöglichen, Fahrzeuge im öffentlichen Straßenverkehr auch völlig ohne Fahrereingriff im Sinne eines "Autopiloten" zu bewegen. Dabei sollen mehrere Fahrzeuge automatisch gesteuert mit einem Abstand hintereinander fahren, der geringer als ein eigentlich vorgeschriebener Sicherheitsabstand ist (Platooning). Dies ist nur möglich, wenn durch geeignete Kommunikation zwischen den Fahrzeugen alle gleichzeitig und mit gleicher Verzögerung bremsen können.

Im Rahmen von solchen (teil-)autonomen Fahrzeugkonzepten ist es daher nötig, dass die elektrische Ausrüstung eines Fahrzeugs Brems- und/oder Lenkanforderungen auf elektronischem Wege erhalten und umsetzen kann.

Hiervon ausgehend besteht die Aufgabe der Erfindung darin, eine eingangs beschriebene elektrische Ausrüstung derart weiter zu bilden, dass sie eine möglichst hohe Fahrstabilität bei hoher Ausfallsicherheit gewährleistet. Weiterhin soll auch ein Fahrzeug mit einer solchen elektrischen Ausrüstung zur Verfügung gestellt werden.

Diese Aufgabe wird erfindungsgemäß durch die Merkmale der Ansprüche 1 und 18 gelöst.

### Offenbarung der Erfindung

Die Erfindung geht aus von einer elektrischen Ausrüstung eines Fahrzeugs mit:
a) Einer als elektropneumatische Betriebsbremseinrichtung, insbesondere als elektronisch bremsdruckgeregeltes Bremssystem (EBS) ausgebildeten Betriebsbremseinrichtung, welche eine elektropneumatische Betriebsbremsventileinrichtung, eine erste elektronische Bremssteuereinrichtung EBS-ECU, elektropneumatische Modulatoren sowie pneumatische Radbremsaktuatoren beinhaltet, und mit
b) einer Sensorsignale liefernden Sensoreinrichtung umfassend wenigstens einen der folgenden Sensoren: Wenigstens einen Raddrehzahlsensor, welcher die Raddrehzahl wenigstens eines ihm zugeordneten Fahrzeugrads erfasst, einen Längsbeschleunigungssensor, welcher die Längsbeschleunigung des Fahrzeugs erfasst, einen Querbeschleunigungssensor, welcher die Querbeschleunigung des Fahrzeugs erfasst, einen Gierratensensor, welcher die Gierrate des Fahrzeugs erfasst, einen Lenkradwinkelsensor, welcher den Lenkradwinkel eines Lenkrads des Fahrzeugs erfasst, wobei
c) die erste elektronische Bremssteuereinrichtung EBS-ECU die elektropneumatischen Modulatoren elektrisch steuert und die elektropneumatischen Modulatoren daraufhin pneumatische Bremsdrücke oder Bremssteuerdrücke für die pneumatischen Radbremsaktuatoren erzeugen, wobei
d) die elektropneumatische Betriebsbremsventileinrichtung ein Betriebsbremsbetätigungsorgan sowie innerhalb wenigstens eines elektrischen Betriebsbremskreises wenigstens einen elektrischen Kanal (130) mit wenigstens einem vom Betriebsbremsbetätigungsorgan betätigbaren elektrischen Bremswertgeber zum von einer Betätigung des Betriebsbremsbetätigungsorgans abhängigen Aussteuern von Betätigungssignalen aufweist, sowie wenigstens eine die Betätigungssignale empfangende zweite, von der ersten elektronischen Bremssteuereinrichtung unabhängige elektronische Bremssteuereinrichtung FBM-ECU, welche abhängig von den Betätigungssignalen Bremsanforderungssignale in die erste elektronische Bremssteuereinrichtung EBS-ECU einsteuert, sowie innerhalb wenigstens eines pneumatischen Betriebsbremskreises wenigstens einen pneumatischen Kanal, bei welchem durch Betätigung des Betriebsbremsbetätigungsorgans aufgrund einer Fahrerbremsanforderung wenigstens ein Steuerkolben der Betriebsbremsventileinrichtung mit einer ersten Betätigungskraft belastet wird und der Steuerkolben wenigstens ein einen Einlasssitz und einen Auslasssitz beinhaltendes Doppelsitzventil der Betriebsbremsventileinrichtung direkt oder indirekt steuert, um pneumatische Bremsdrücke oder Bremssteuerdrücke für die pneumatischen Radbremsaktuatoren zu erzeugen, und wobei
e) ein die zweite elektronische Bremssteuereinrichtung FBM-ECU der elektropneumatischen Betriebsbremsventileinrichtung beinhaltendes Mittel vorgesehen ist, welches wenigstens bei Vorliegen einer unabhängig von einer Fahrerbremsanforderung anforderten Bremsung eine zweite Betätigungskraft erzeugt, welche in Bezug zur ersten Betätigungskraft gleichsinnig oder gegensinnig auf den wenigstens einen Steuerkolben (12) wirkt.

Daher wird der wenigstens eine Steuerkolben der Betriebsbremsventileinrichtung außer durch die erste Betätigungskraft und wenigstens bei Vorliegen einer unabhängig von einer Fahrerbremsanforderung anforderten Bremsung zusätzlich durch die zweite Betätigungskraft oder anstatt der ersten Betätigungskraft durch die zweite Betätigungskraft belastet, welche in Bezug zur ersten Betätigungskraft parallel und gleichsinnig oder gegensinnig auf den wenigstens einen Steuerkolben wirkt.

Mit anderen Worten wirken auf den Steuerkolben der Betriebsbremsventileinrichtung die erste, von einer Fahrerbremsanforderung abhängige Betätigungskraft und/oder bei Vorliegen einer vom Fahrerwunsch unabhängigen Bremsanforderung die zweite Betätigungskraft in paralleler Weise, wobei die zweite Betätigungskraft auf der Basis von durch die elektronische Steuereinrichtung der Betriebsbremsventileinrichtung ausgesteuerten elektrischen Signalen erzeugt wird. Folglich vermögen entweder beide Betätigungskräfte (erste und zweite Betätigungskraft) zusammen oder auch jede Betätigungskraft einzeln für sich ohne Vorhandensein der jeweils anderen Betätigungskraft den Steuerkolben und damit auch das Doppelsitzventil des Betriebsbremsventils zu betätigen. Dabei können die beiden Betätigungskräfte gleichsinnig, d.h. in gleicher Richtung auf den Steuerkolben wirken als auch gegensinnig, d.h. in entgegen gesetzter Richtung.

Die erste, abhängig von einer Fahrerbremsanforderung erzeugte Betätigungskraft wirkt auf den wenigstens einen Steuerkolben stets in der gleichen Richtung, nämlich bedingt durch die Betätigungsrichtung des Bremsbetätigungsorgans in Richtung Öffnen des Auslasssitzes des Doppelsitzventils zum Belüften des wenigstens einen Betriebsbremskreises, so dass die Begriffe "gleichsinnig" bzw. "gegensinnig" in Bezug zur Wirkungsrichtung der ersten Betätigungskraft klar definiert sind. Dabei ist klar, dass im Falle einer mangels Fahrerbremsanforderung nicht vorhandenen ersten Betätigungskraft deren Wirkrichtung auf den wenigstens einen Steuerkolben lediglich gedacht ist, um eine Referenz für die hierzu dann parallele Wirkrichtung der zweiten Betätigungskraft angeben zu können.

Damit ergeben sich weitere Steuerungsmöglichkeiten der elektropneumatischen Betriebsbremseinrichtung, indem nun der wenigstens eine pneumatische Betriebsbremskreis neben einer Betätigung durch den Fahrer nun auch elektrisch oder elektronisch und damit ohne Zutun des Fahrers bei Vorliegen einer Bremsanforderung automatisiert betätigt werden kann. Die Steuerung oder Regelung des wenigstens einen pneumatischen Betriebsbremskreises der elektropneumatischen Betriebsbremseinrichtung durch die elektronische Steuereinrichtung der Betriebsbremsventileinrichtung kann dann durch beliebige elektrische Steuersignale eines beliebigen Fahrzeugsystems bzw. einer beliebigen "Autorität" erfolgen, welche eine Bremsanforderung erzeugen kann.

Die erste elektronische Bremssteuereinrichtung EBS-ECU stellt bevorzugt eine zentrale Steuerelektronik dar, in welcher alle höheren Funktionen wie z.B. eine achslastabhängige Bremskraftverteilung (ALB) oder eine Differenzschlupfregelung sowie Bremsschlupf-Regelroutinen (ABS-Routinen) und/oder Fahrdynamik-Regelroutinen implementiert sind. Hierzu empfängt die erste elektronische Bremssteuereinrichtung EBS-ECU die Sensorsignale der Sensoreinrichtung und steuert dann abhängig von diesen Sensorsignalen die elektropneumatischen Modulatoren an, welche daraufhin pneumatische Bremsdrücke oder Bremssteuerdrücke für die pneumatischen Radbremsaktuatoren erzeugen. Dabei kann ein Teil der Bremsschlupf-Regelroutinen (ABS-Routinen) in lokalen elektronischen Steuergeräten der elektropneumatischen Modulatoren implementiert sein, während beispielsweise die für eine Bremsschlupfregelung (ABS) notwendige Bestimmung der Fahrzeugreferenzgeschwindigkeit durch die erste elektronische Bremssteuereinrichtung EBS-ECU erfolgt, welcher die Radgeschwindigkeiten aller Räder durch die Sensoreinrichtung geliefert wird.

Ein Fehler oder Ausfall der ersten elektronischen Bremssteuereinrichtung EBS-ECU bzw. von deren elektrischer Energieversorgung würde daher wegen der pneumatischen Rückfallebene in der elektropneumatischen Betriebsbremseinrichtung zwar nicht zu einem Ausfall der Betriebsbremseinrichtung führen. Bei einer durch Fahrer angeforderten Bremsung würde eine solche dann rein pneumatisch gesteuerte Notfallbremsung ohne Bremsschlupfregelung und ohne Fahrdynamikregelung vonstatten gehen. Bei einer durch ein Fahrerassistenzsystem wie z.B. einem Autopiloten automatisch angeforderten Bremsung wäre dann zwar ebenfalls durch die zweite Betätigungskraft auf den Steuerkolben eine z.B. pneumatisch gesteuerte Notfallbremsung gesichert, aber ebenfalls ohne Bremsschlupfregelung und ohne Fahrdynamikregelung.

### Gemäß der Erfindung ist daher vorgesehen, dass

f) in der zweiten elektronischen Bremssteuereinrichtung FBM-ECU Bremsschlupf-Regelroutinen und/oder Fahrdynamik-Regelroutinen implementiert sind, und dass
g) die zweite elektronische Bremssteuereinrichtung FBM-ECU Sensorsignale der Sensoreinrichtung empfängt, und dass
h) bei Vorliegen einer abhängig von einer Fahrerbremsung oder unabhängig von einer Fahrerbremsanforderung anforderten Bremsung das die zweite elektronische Bremssteuereinrichtung FBM-ECU der elektropneumatischen Betriebsbremsventileinrichtung beinhaltende Mittel die zweite Betätigungskraft auch abhängig von den durch die zweite elektronische Bremssteuereinrichtung FBM-ECU empfangenen Sensorsignalen derart erzeugt, dass bei der anforderten Bremsung zumindest eine Bremsschlupfregelung ABS und/oder eine Fahrdynamikregelung ESC durchgeführt wird.

Daher stellt die ursprünglich für die Signale des elektrischen Bremswertgebers als reine Signal-Auswerteeinrichtung vorgesehene oder gemäß DE 10 2014 112 014 A1 als redundante Umsetzeinheit für durch eine Autopiloteinrichtung oder ein Fahrerassistenzsystem automatisch erzeugte Bremsanforderungssignale vorgesehene zweite elektronische Bremssteuereinrichtung FBM-ECU nun auch eine im Hinblick auf ABS- und/oder ESC-Funktionen vollständige Redundanz für die erste elektronische Bremssteuereinrichtung EBS-ECU dar. Diese Redundanz ist sowohl für eine abhängig von einer Fahrerbremsung durch Betätigen eines Bremspedals anforderten Bremsung oder unabhängig von einer Fahrerbremsanforderung beispielsweise durch eine Autopiloteinrichtung oder ein Fahrerassistenzsystem anforderten Bremsung vorgesehen.

Bei Auftreten eines Fehlers oder Ausfalls der ersten elektronischen Bremssteuereinrichtung EBS-ECU bzw. von deren elektrischer Energieversorgung ist dann die autonom und ohne Zutun des Fahrers angeforderte Bremsung bremsschlupfgeregelt bzw. fahrdynamisch geregelt. Im Fall einer durch den Fahrer angeforderten Bremsung ist diese dann ebenfalls bremsschlupfgeregelt bzw. fahrdynamisch geregelt, sofern die zweite elektronische Bremssteuereinrichtung FBM-ECU bevorzugt von einer unabhängigen elektrischen Energieversorgung stromversorgt wird.

Bei einer durch Betätigen eines Bremspedals anforderten Bremsung liegen der zweiten elektronische Bremssteuereinrichtung FBM-ECU ohnehin bereits die vom elektrischen Bremswertgeber der Betriebsbremsventileinrichtung abhängig von einer Betätigung des Betriebsbremsbetätigungsorgans erzeugten Betätigungssignale vor, aus welchen dann die zweite elektronische Bremssteuereinrichtung FBM-ECU entsprechende Bremsanforderungssignale bildet und diese dann entweder über die zweite Betätigungskraft in dem wenigstens einen pneumatischen Kanal der elektropneumatischen Betriebsbremseinrichtung oder bei über eine elektrische Steuerung der intakt stromversorgten elektropneumatischen Modulatoren der elektropneumatischen Betriebsbremseinrichtung umsetzt. Im letzten Fall werden die Bremsanforderungssignale der zweiten elektronischen Bremssteuereinrichtung FBM-ECU dann beispielsweise über die erste elektronische Bremssteuereinrichtung EBS-ECU in die elektropneumatischen Modulatoren eingesteuert, wobei die erste elektronische Bremssteuereinrichtung EBS-ECU die Bremsanforderungssignale zu den Druckregelmodulen über Signalleitungen durchschleift. Hierfür ist eine Funktionstüchtigkeit oder Stromversorgung der ersten elektronischen Bremssteuereinrichtung EBS-ECU aber nicht notwendige Voraussetzung.

In beiden Fällen wertet für die Realisierung der ABS-Funktion bzw. der Fahrdynamikregel-Funktion die zweite elektronische Bremssteuereinrichtung in bekannter Weise die Sensorsignale der Sensoreinrichtung aus, welche ihr zugeführt werden. Die ABS-Bremsschlupfregelroutine beispielsweise benötigt die Raddrehzahlsignale der Räder des Fahrzeugs, um den Bremsschlupf radweise oder achsweise auf einen vorgegebenen Soll-Bremsschlupf einzuregeln und erhält diese Raddrehzahlsignale von der Sensoreinrichtung.

Unter Bremsschlupf-Regelroutinen einer Bremsschlupfregelung ABS sind daher Regelroutinen zu verstehen, welche eine unzulässige Abweichung des Ist-Bremsschlupfes vom Soll-Bremsschlupf auf eine zulässige Abweichung einregeln.

In analoger Weise liefert für die Fahrdynamik-Regelroutinen des Fahrdynamikregelsystems ESC der Lenkradwinkelsensor den Fahrerwunsch hinsichtlich der Fahrtrichtung, die Raddrehzahlsensoren, der Querbeschleunigungssensor und der Gierratensensor die das Fahrzeugverhalten beschreibenden Daten. Wenn eine unzulässige Abweichung des Ist-Fahrverhaltens vom Soll-Fahrverhalten gemäß Fahrerwunsch festgestellt wird, greifen die Fahrdynamik-Regelroutinen des Fahrdynamikregelsystem ESC ein.

Unter Fahrdynamik-Regelroutinen eines Fahrdynamikregelsystem ESC sind daher Regelroutinen zu verstehen, welche eine unzulässige Abweichung des Ist-Fahrverhaltens vom Soll-Fahrverhalten gemäß Fahrerwunsch auf eine zulässige Abweichung einregeln.

Ein Übersteuern wird beispielsweise durch Abbremsen des kurvenäußeren Vorderrades, ein Untersteuern durch Abbremsung des kurveninneren Hinterrades korrigiert. Die Radposition spielt dabei eine doppelte Rolle: Einerseits erzeugt die Bremskraft auf der kurveninneren Seite ein Giermoment, das das Eindrehen unterstützt, und umgekehrt. Andererseits verliert ein gebremstes Rad an Seitenführungsfähigkeit, d.h. Bremskraft an der Hinterachse unterstützt das Eindrehen, und umgekehrt. Zusätzlich können die Fahrdynamik-Regelroutinen der Fahrdynamikregelung ESC auch die Antriebsleistung der Antriebsmaschine drosseln, um die Fahrzeuggeschwindigkeit zu verringern und um ein Durchdrehen der Antriebsräder zu verhindern.

Bevorzugt beinhalten die in der zweiten elektronischen Bremssteuereinrichtung FBM-ECU implementierten Fahrdynamik-Regelroutinen der Fahrdynamikregelung ESC auch eine Routine zur Regelung oder Steuerung der Antriebsleistung einer Antriebsmaschine des Fahrzeugs.

Weiterhin ist es möglich, die Erfindung als Nachrüstlösung für eine bereits bestehende elektrische Ausrüstung eines Fahrzeugs zu verwenden, indem die ohnehin vorhandene elektronische Auswerteeinrichtung für die Betätigungssignale des elektrischen Bremswertgebers durch die Routinen der beschriebenen Steuerungen/Regelungen erweitert wird. Die Änderungen an einer bereits bestehenden Betriebsbremsventileinrichtung beschränken sich dann im Wesentlichen auf einen zusätzlichen Druckanschluss im Bereich oberhalb des pneumatischen Steuerkolbens. Diese Änderungen können daher mit geringen Werkzeug- und Montageinvestitionen für eine bereits bestehende elektrische Ausrüstung bzw. elektropneumatische Betriebsbremseinrichtung eines Fahrzeugs umgesetzt werden, ohne dass die relativ teuren Druckgusswerkzeuge für das Gehäuse der Betriebsbremsventileinrichtung verändert werden müssten. Ein zusätzliches Gehäuse für die zweite elektronische Bremssteuereinrichtung FBM-ECU und beispielsweise für eine Magnetventileinrichtung zur Erzeugung der zweiten Betätigungskraft kann dann insbesondere an das Gehäuse der bestehenden Betriebsbremsventileinrichtung angeflanscht werden.

Alternativ kann natürlich auch die zweite elektronische Bremssteuereinrichtung FBM-ECU und beispielsweise die Magnetventileinrichtung zur Erzeugung der zweiten Betätigungskraft in dem Gehäuse der bestehenden Betriebsbremsventileinrichtung untergebracht werden, um eine Baueinheit zu erzeugen.

Insgesamt wird dadurch eine hohe Ausfallsicherheit der Bremsschlupfregelung (ABS-Regelung) bzw. der Fahrdynamikregelung ESC der elektropneumatischen Betriebsbremseinrichtung gewährleistet, ohne dass hierzu etwa eine zusätzliche elektronische Steuereinrichtung vorgesehen werden müsste, weil die zweite elektronische Bremssteuereinrichtung FBM-ECU als Signal-Auswerteeinrichtung für die Signale des elektrischen Bremswertgebers ohnehin bereits vorhanden ist und deren Funktionalität gemäß der Erfindung im Sinne einer vollwertigen Bremssteuereinrichtung mit integrierter ABS-Funktion und/oder integrierter ESC-Funktion lediglich erweitert wird.

Besonders bevorzugt erzeugen daher die in der zweiten elektronischen Bremssteuereinrichtung FBM-ECU implementierten Bremsschlupf-Regelroutinen die zweite Betätigungskraft auch abhängig von Sensorsignalen des wenigstens einen Raddrehzahlsensors derart, dass bei der anforderten Bremsung eine Bremsschlupfregelung (ABS) durchgeführt wird.

Weiterhin bevorzugt erzeugen daher die in der zweiten elektronischen Bremssteuereinrichtung FBM-ECU implementierten Fahrdynamik-Regelroutinen die zweite Betätigungskraft auch abhängig von Sensorsignalen des wenigstens einen Raddrehzahlsensors, des wenigstens einen Gierratensensors, des wenigstens einen Querbeschleunigungssensor und des wenigstens einen Lenkradwinkelsensors derart, dass bei der anforderten Bremsung eine Fahrdynamikregelung ESC durchgeführt wird.

Durch die in den weiteren Unteransprüchen angegebenen Merkmale sind vorteilhafte Ausführungen und Ausgestaltungen der in Anspruch 1 angegebenen Erfindung angegeben.

Die Sensorsignale können der zweiten elektronischen Bremssteuereinrichtung FBM-ECU gemäß verschiedener Varianten zugeführt werden.

Zum einen kann die Sensoreinrichtung die Sensorsignale direkt in die zweite elektronische Bremssteuereinrichtung (FBM-ECU) einsteuern, beispielsweise dadurch, dass zwischen der Sensoreinrichtung und der zweiten elektronischen Bremssteuereinrichtung (FBM-ECU) Signalleitungen und erforderlichenfalls auch Stromversorgungsleitungen gezogen sind.

Gemäß einer weiteren Variante kann auch wenigstens ein Sensor der Sensoreinrichtung doppelt vorhanden sein, wobei ein erster Sensor des doppelt vorhandenen Sensors die Sensorsignale in die erste elektronische Bremssteuereinrichtung EBS-ECU und ein zweiter Sensor des doppelt vorhandenen Sensors die Sensorsignale in die zweite elektronische Bremssteuereinrichtung FBM-ECU einsteuert. In diesem Fall sind die Sensorsignale der ersten elektronische Bremssteuereinrichtung EBS-ECU und der zweiten elektronische Bremssteuereinrichtung FBM-ECU parallel, aber durch redundante und identische Sensoren zugeführt. Beide elektronische Bremssteuereinrichtungen sind dann in der Lage, die Sensorsignale der Sensorei8rncihtung unabhängig voneinander zu verarbeiten.

Gemäß einer weiteren Maßnahme kann die elektrische Ausrüstung eine Autopiloteinrichtung oder ein Fahrerassistenzsystem umfassen, welche oder welches ein die unabhängig von einer Fahrerbremsanforderung anforderte Bremsung auslösendes Bremsanforderungssignal und/oder ein eine unabhängig von einer Fahrerlenkanforderung anforderte Lenkung auslösendes Lenkanforderungssignal direkt oder indirekt in die zweite elektronische Bremssteuereinrichtung FBM-ECU einsteuert, wobei das Bremsanforderungssignal und/oder das Lenkanforderungssignal in Abhängigkeit von Fahrbetriebsbedingungen erzeugt wird/werden.

Unter einer Autopiloteinrichtung soll eine Einrichtung verstanden werden, welche wenigstens die Betriebsbremseinrichtung und eine Lenkeinrichtung des Fahrzeugs ohne Zutun des Fahrers steuert oder regelt, insbesondere in Abhängigkeit von Fahrbetriebsbedingungen. Ein Fahrerassistenzsystem beeinflusst in der Regel das Gier-, Roll- und/oder Nickverhalten, das Brems- oder Beschleunigungsverhalten wie auch den Abstand und/oder die Relativgeschwindigkeit zu einem vorausfahrenden Fahrzeug und kann z.B. durch eine Abstandsfolgeregelung (ACC, Adaptive Cruise Control) gebildet werden, durch welche der Abstand bzw. die Relativgeschwindigkeit zu einem vorausfahrenden Fahrzeug konstant gehalten wird oder auch durch einen Notbremsassistenten (AEBS), wobei und/oder Bremseingriffe automatisch und unabhängig vom Fahrer erfolgen können, um Sicherheitsvorgaben wie z.B. einen gewissen Mindestabstand zu einem voraus fahrenden Fahrzeug, eine gewisse Mindestbremswirkung sowie eine gewisse Mindestfahrstabilität zu gewährleisten.

Unter "Fahrbetriebsbedingungen" sind alle erdenklichen Bedingungen und Umstände zu verstehen, welche bei einem Fahrbetrieb eines Fahrzeugs auftreten wie beispielsweise das Gier-, Roll- und/oder Nickverhalten, das Brems- oder Beschleunigungsverhalten wie auch der Abstand und/oder die Relativgeschwindigkeit zu einem vorausfahrenden Fahrzeug, aber auch das Verhalten im Stand oder eingeparkten Zustand.

Folglich setzt dann zum einen die zweite elektronische Bremssteuereinrichtung FBM-ECU die unabhängig von einer Fahrerbremsanforderung anforderte Bremsung durch das Mittel um, welches die zweite Betätigungskraft auf den wenigstens einen Steuerkolben der Betriebsbremsventileinrichtung erzeugt.

Zum andern setzt dann die zweite elektronische Bremssteuereinrichtung FBM-ECU als elektronische Lenksteuereinrichtung einer elektro-mechanische Lenkeinrichtung eine unabhängig von einer Fahrerlenkanforderung anforderte Lenkung dadurch um, dass sie das entsprechende Lenkanforderungssignal von der Autopiloteinrichtung oder dem Fahrerassistenzsystem empfängt und dann abhängig davon einen elektrischen Lenksteller zum Lenken des Fahrzeugs betätigt.

Bevorzugt weist daher die elektrische Ausrüstung daher eine elektro-mechanische Lenkeinrichtung mit oder ohne durchgehende mechanische Verbindung zwischen einem Lenkrad und einem Lenkgetriebe sowie mit einer elektronischen Lenksteuereinrichtung und einem elektrischen Lenksteller auf, wobei die elektronische Lenksteuereinrichtung ein Lenkanforderungssignal empfängt und abhängig von dem Lenkanforderungssignal den elektrischen Lenksteller zum Lenken des Fahrzeugs betätigt. Das Lenkanforderungssignal kann dabei abhängig oder unabhängig von einer Fahrerlenkanforderung sein, wie oben beschrieben.

Gemäß einer Weiterbildung sind in der zweiten elektronischen Bremssteuereinrichtung FBM-ECU Lenksteuerroutinen implementiert, welche abhängig von einer Lenkanforderung durch die Autopiloteinrichtung, das Fahrerassistenzsystem oder durch eine Bedienung eines Lenkrads durch den Fahrer das Lenkanforderungssignal erzeugt und dann in den elektrischen Lenksteller einsteuert.

Bevorzugt werden daher mit und ohne Zutun des Fahrers erzeugte Lenkanforderungssignale nicht nur in die elektronische Lenksteuereinrichtung der Lenkeinrichtung, sondern auch in die zweite elektronische Bremssteuereinrichtung FBM-ECU eingesteuert, bzw. von der zweiten elektronischen Bremssteuereinrichtung FBM-ECU z.B. auf einem angeschlossenen Datenbus "mitgelesen".

Damit stellt die zweite elektronische Bremssteuereinrichtung FBM-ECU bevorzugt auch eine Redundanz für eine elektronische Lenksteuereinrichtung der Lenkeinrichtung dar, wenn die elektronische Lenksteuereinrichtung eine abhängig oder unabhängig von einer Fahrerlenkanforderung anforderte Lenkung des Fahrzeugs (z.B. durch eine Autopiloteinrichtung oder ein Fahrerassistenzsystem angefordert) umsetzen soll, aber nicht funktionsfähig oder nicht stromversorgt ist.

Gemäß einer weiteren Variante zur Zuführung der Sensorsignale der Sensoreinrichtung zur zweiten elektronischen Bremssteuereinrichtung FBM-ECU kann eine mit der Sensoreinrichtung zusammen wirkende Auswerteelektronik vorgesehen sein, welche aus den von der Sensoreinrichtung gelieferten Sensorsignalen datenbustaugliche Sensorsignale bildet und in einen angeschlossenen Datenbus einsteuert, an welchen auch wenigstens die zweite elektronische Bremssteuereinrichtung FBM-ECU angeschlossen ist.

Die Auswerteelektronik kann dabei durch eine beliebige elektronische Steuereinrichtung gebildet werden, insbesondere auch durch das elektronische Steuergerät der Autopiloteinrichtung oder das elektronische Steuergerät des Fahrerassistenzsystems, durch die erste elektronische Bremssteuereinrichtung EBS-ECU, durch die zweite elektronische Bremssteuereinrichtung FBM-ECU oder durch die elektronische Lenksteuereinrichtung.

Gemäß einer Fortbildung dieser Maßnahme kann an den Datenbus wenigstens Folgendes angeschlossen sein: Ein elektronisches Steuergerät der Autopiloteinrichtung und/oder ein elektronisches Steuergerät des Fahrerassistenzsystems, die erste elektronische Bremssteuereinrichtung EBS-ECU, die zweite elektronische Bremssteuereinrichtung FBM-ECU, die elektronische Lenksteuereinrichtung, die mit der Sensoreinrichtung zusammen wirkende Elektronik sowie ein Motorsteuergerät einer Antriebsmaschine des Fahrzeugs.

An dem Datenbus, an welchen auch die zweite elektronische Bremssteuereinrichtung FBM-ECU angeschlossen ist, sind dann zum einen die Sensorsignale der Sensoreinrichtung verfügbar, welche dann von der zweiten elektronischen Bremssteuereinrichtung FBM-ECU zur Realisierung der ABS-Funktion und/oder der Fahrdynamikregel-Funktion verwertet werden. Zum andern stehen an dem Datenbus auch die Lenkanforderungssignale zur Verfügung, welche von der Autopiloteinrichtung oder dem Fahrerassistenzsystem abhängig von den Fahrbetriebsbedingungen automatisch oder abhängig vom Fahrerlenkwunsch erzeugt werden. Diese Lenkanforderungssignale kann dann die zweite elektronische Bremssteuereinrichtung FBM-ECU in der oben beschriebenen Weise als Redundanz für die elektronische Lenksteuereinrichtung umsetzen, indem sie abhängig von den Lenkanforderungssignalen den elektrischen Lenksteller zum Lenken des Fahrzeugs betätigt.

Um "Lenken" und "Bremsen" auch bei einem Fehler in der elektrischen Energieversorgung zu gewährleisten, sind bei einem Fahrzeug mit der erfindungsgemäßen Ausstattung wenigstens zwei Energieversorgungskreise notwendig, die so gestaltet sind, dass bei einem Fehler in einem der Kreise noch genügend elektrische Energie vorhanden ist, um ein "Bremsen" und erforderlichenfalls auch ein "Lenken" des Fahrzeugs weiterhin betreiben zu können.

Besonders bevorzugt ist daher die elektropneumatische Betriebsbremseinrichtung von einer ersten elektrischen Energiequelle oder von einem ersten Energieversorgungskreis mit elektrischer Energie versorgt, welche oder welcher unabhängig von einer zweiten elektrischen Energiequelle oder einem zweiten Energieversorgungskreis ist, welche oder welcher die elektropneumatische Betriebsbremsventileinrichtung mit elektrischer Energie versorgt.

Die Sensoreinrichtung wird dabei bevorzugt ebenfalls von der zweiten elektrischen Energiequelle oder von dem zweiten Energieversorgungskreis mit elektrischer Energie versorgt.

Wenn dann die erste elektrische Energiequelle oder der erste Energieversorgungskreis ausfällt und demzufolge die erste elektronische Bremssteuereinrichtung EBS-ECU sowie die elektropneumatischen Modulatoren stromlos sind, so wird mit Hilfe der zweiten elektrischen Energiequelle die elektropneumatische Betriebsbremsventileinrichtung mit dem wenigstens einen elektrischen Bremswertgeber und der zweiten elektronischen Bremssteuereinrichtung EBS-ECU mit elektrischer Energie versorgt. Dann können vom Fahrerbremswunsch abhängige und vom Fahrerbremswunsch unabhängige elektrische Bremsanforderungssignale durch das zweite elektronische Bremssteuereinrichtung EBS-ECU beinhaltende Mittel über die zweite Betätigungskraft in wenigstens einem pneumatischen Bremskreis pneumatisch umgesetzt werden und zwar mit voller ABS- und/oder Fahrdynamikregelung.

Wenn dann weiterhin bevorzugt die elektro-mechanische Lenkeinrichtung ebenfalls von der zweiten elektrischen Energiequelle oder von dem zweiten Energieversorgungskreis mit elektrischer Energie versorgt ist, dann können auch bei einem Ausfall der ersten elektrischen Energiequelle oder des ersten Energieversorgungskreises vom Fahrerlenkwunsch abhängige und vom Fahrerlenkwunsch unabhängige elektrische Lenkanforderungssignale weiterhin durch die Lenkeinrichtung umgesetzt werden.

Wesentlich ist auch, dass der Fahrer die durch die zweite Betätigungskraft bewirkte Bremsanforderung jederzeit durch eine Betätigung des Bremsbetätigungsorgans der Betriebsbremsventileinrichtung übersteuern kann, weil dann parallel zu der zweiten Betätigungskraft die auf der Fahrerbremsanforderung basierende erste Betätigungskraft auf den wenigstens einen Steuerkolben aufgebracht wird, welche unter Umständen größer als die zweite Betätigungskraft und auch dieser entgegen gerichtet ist.

Denn in manchen Fällen kann es wünschenswert oder notwendig sein, dass der durch die erste Betätigungskraft auf den Steuerkolben repräsentierte Fahrerbremswunsch durch Erzeugen einer entsprechend großen und entgegen wirkenden zweiten Betätigungskraft übersteuert wird, beispielsweise dann, wenn der Fahrer bei einer Kolonnenfahrt mit jeweils geringem Abstand zu dem vorausfahrenden und nachfolgenden Fahrzeug plötzlich eine Vollbremsung einleiten möchte, wodurch die Gefahr eines Auffahrunfalls entstehen würde.

Besonders bevorzugt wird eine solche zweite Betätigungskraft auch erzeugt, wenn ein Fehler oder ein Ausfall des elektrischen Betriebsbremskreises der elektropneumatischen Betriebsbremseinrichtung festgestellt worden ist und wenn eine Bremsanforderung vorliegt. Von einem solchen Fehler oder Ausfall kann insbesondere die erste elektronische Bremssteuereinrichtung EBS-ECU, wenigstens ein elektropneumatischer Achsmodulator oder auch der elektrische Kanal der elektropneumatischen Betriebsbremsventileinrichtung betroffen sein. Denkbar ist aber auch ein Ausfall der elektrischen Energieversorgung des elektrischen Betriebsbremskreises.

Es versteht sich, dass im Falle mehrerer pneumatischer Kanäle der Betriebsbremsventileinrichtung auch mehr als nur ein einziger Steuerkolben durch die zweite Betätigungskraft belastet werden kann bzw. auch nur ein einziger Steuerkolben, welcher dann die zweite Betätigungskraft auf einen weiteren Betätigungskolben überträgt.

Bevorzugt beinhaltet das Mittel zur Erzeugung der zweiten Betätigungskraft wenigstens einen elektrischen, elektrohydraulischen oder elektropneumatischen Aktuator. Denkbar sind dabei dann Ausführungsformen, bei denen die zweite Betätigungskraft mit Hilfe eines elektropneumatischen, elektrohydraulischen oder elektromechanischen Aktuators wie z.B. Magnetventil, Elektromotor usw. erzeugt werden, welcher dann direkt oder indirekt auf den wenigstens einen Steuerkolben der Betriebsbremsventileinrichtung wirkt.

Gemäß einer Weiterbildung beinhalten die Mittel zur Erzeugung der zweiten Betätigungskraft wenigstens eine elektro-pneumatische Magnetventileinrichtung, welche abhängig von den elektrischen Signalen zur Bildung der zweiten Betätigungskraft wenigstens einen pneumatischen Steuerdruck aussteuert, von welchem die zweite Betätigungskraft abhängig ist. Auf ein Signal der zweiten elektronischen Bremssteuereinrichtung FBM-ECU der Betriebsbremsventileinrichtung hin wird daher ein Steuerdruck ausgesteuert, der auf den wenigstens einen Steuerkolben direkt oder indirekt wirkt. Dieser Steuerdruck erzeugt dann an dem wenigstens einen Steuerkolben die zweite Betätigungskraft. Besonders bevorzugt wird die zweite Betätigungskraft daher elektro-pneumatisch unter bestmöglicher Nutzung der bereits vorhandenen Verhältnisse an der Betriebsbremsventileinrichtung erzeugt.

Insbesondere wird dabei der von der wenigstens einen Magnetventileinrichtung ausgesteuerte Steuerdruck mittels einer Sensorik gemessen und durch Abgleich mit einem Sollwert in der zweiten elektronischen Bremssteuereinrichtung FBM-ECU geregelt, wobei die Sensorik, die Magnetventileinrichtung zusammen mit der zweiten elektronischen Bremssteuereinrichtung FBM-ECU einen Steuerdruckregler zur Regelung des pneumatischen Steuerdrucks bilden.

Ganz allgemein ist daher vorzugsweise vorgesehen, dass die auf den wenigstens einen Steuerkolben wirkende zweite Betätigungskraft, ein von der zweiten Betätigungskraft herrührender Betätigungsweg des wenigstens einen Steuerkolbens der Betriebsbremsventileinrichtung und/oder eine die zweite Betätigungskraft erzeugende Größe, z.B. der oben erwähnte pneumatische Steuerdruck als Ist-Größe gemessen und mit einer Soll-Größe im Sinne einer Regelung abgeglichen wird. Mit Hilfe der hier optionalen Regelung der zweiten Betätigungskraft oder einer der mit ihr in Zusammenhang stehenden obigen Größen kann die Genauigkeit der Bremsdruckeinstellung erhöht werden, insbesondere im Hinblick auf die implementierten ABS- bzw. Fahrdynamikregelroutinen.

Zur Realisierung einer solchen Regelungsfunktion können Sensormittel vorgesehen werden, durch welche die auf den wenigstens einen Steuerkolben wirkende zweite Betätigungskraft, ein von der zweiten Betätigungskraft herrührender Betätigungsweg des wenigstens einen Steuerkolbens und/oder eine die zweite Betätigungskraft erzeugende Größe als Ist-Größe gemessen wird, sowie Regelungs- und Stellmittel, durch welche die Ist-Größe mit einer Soll-Größe im Sinne einer Regelung abgeglichen wird.

Insbesondere ist der pneumatische Steuerdruck in wenigstens eine Steuerkammer der elektropneumatischen Betriebsbremsventileinrichtung einsteuerbar, welche von dem wenigstens einen Steuerkolben begrenzt ist, wobei die Steuerkammer derart angeordnet ist, dass sie bei Belüftung eine in Bezug zur ersten Betätigungskraft gleichsinnige oder gegensinnige zweite Betätigungskraft an dem wenigstens einen Steuerkolben bewirkt.

Für eine möglichst einfache Realisierung einer solchen Funktionalität kann weiterhin eine erste Steuerkammer in Bezug zu dem wenigstens einen Steuerkolben derart angeordnet sein, dass durch Belüftung der ersten Steuerkammer eine zweite, in Bezug auf die erste Betätigungskraft gleichsinnige Betätigungskraft auf den wenigstens einen Steuerkolben erzeugt wird. Zusätzlich wird aber eine zweite Steuerkammer derart angeordnet, dass durch Belüftung der zweiten Steuerkammer eine zweite, in Bezug auf die erste Betätigungskraft gegensinnige Betätigungskraft auf den wenigstens einen Steuerkolben erzeugt wird.

Dabei kann bevorzugt vorgesehen werden, dass die erste Steuerkammer mittels einer ersten Magnetventileinrichtung oder mittels eines ersten Steuerdruckreglers und die zweite Steuerkammer, unabhängig davon, mittels einer zweiten Magnetventileinrichtung oder mittels eines zweiten Steuerdruckreglers be- oder entlüftbar ist.

Nicht zuletzt kann der wenigstens eine Steuerkolben ein Doppelkolben mit zwei durch eine Kolbenstange verbundenen Kolben sein, von denen ein erster Kolben die erste Steuerkammer und von denen ein zweiter Kolben die zweite Steuerkammer begrenzt, wobei die erste Steuerkammer und die zweite Steuerkammer an voneinander weg weisenden Flächen einer Innenwandung der Betriebsbremsventileinrichtung grenzen, welche von der Kolbenstange dichtend durchragt wird.

Die Erfindung bezieht sich auch auf ein Fahrzeug mit einer solchen elektrischen Ausrüstung.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: eine schematische Querschnittsdarstellung einer Betriebsbremsventileinrichtung einer elektro-pneumatischen Betriebsbremseinrichtung eines Fahrzeugs gemäß einer bevorzugten Ausführungsform der Erfindung in einer Stellung "Fahren";
- Fig.2: einen schematischen Schaltplan einer bevorzugten Ausführungsform einer elektrischen Ausrüstung eines Fahrzeugs, welche eine elektropneumatische Betriebsbremseinrichtung mit einer Betriebsbremsventileinrichtung nach Fig.1 sowie eine Autopiloteinrichtung und eine Lenkeinrichtung beinhaltet;
- Fig.3: eine vereinfachte schematische Darstellung der elektrischen Ausrüstung von Fig.2;
- Fig.4: die Lenkeinrichtung in einer Situation, in welcher der Fahrer lenkt;
- Fig.5: die Lenkeinrichtung in einer Situation, in welcher der Fahrer lenkt;
- Fig.6: die Lenkeinrichtung in einer Situation, in welcher die Autopiloteinrichtung lenkt;
- Fig.7: die Lenkeinrichtung in einer Situation, in welcher der Fahrer und die Autopiloteinrichtung lenken;
- Fig.8a bis 8c: Ausführungsformen einer Magnetventileinrichtung zur Steuerung der Betriebsbremsventileinrichtung.

### Beschreibung der Ausführungsbeispiele

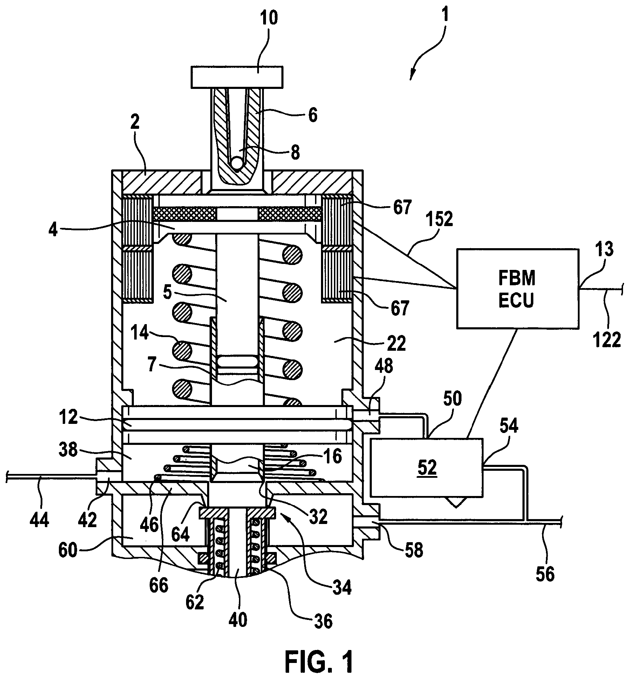

**Fig.1** zeigt eine schematische Querschnittsdarstellung einer Betriebsbremsventileinrichtung 1 einer elektro-pneumatischen Betriebsbremseinrichtung einer elektrischen Ausrüstung eines Fahrzeugs gemäß einer bevorzugten Ausführungsform der Erfindung in einer Stellung "Fahren". Unter elektrischer Ausrüstung soll dabei jegliche Fahrzeugausrüstung verstanden werden, welche elektrische Teile oder Komponenten aufweist, aber daneben noch mechanische, pneumatische und hydraulische Komponenten enthalten kann .

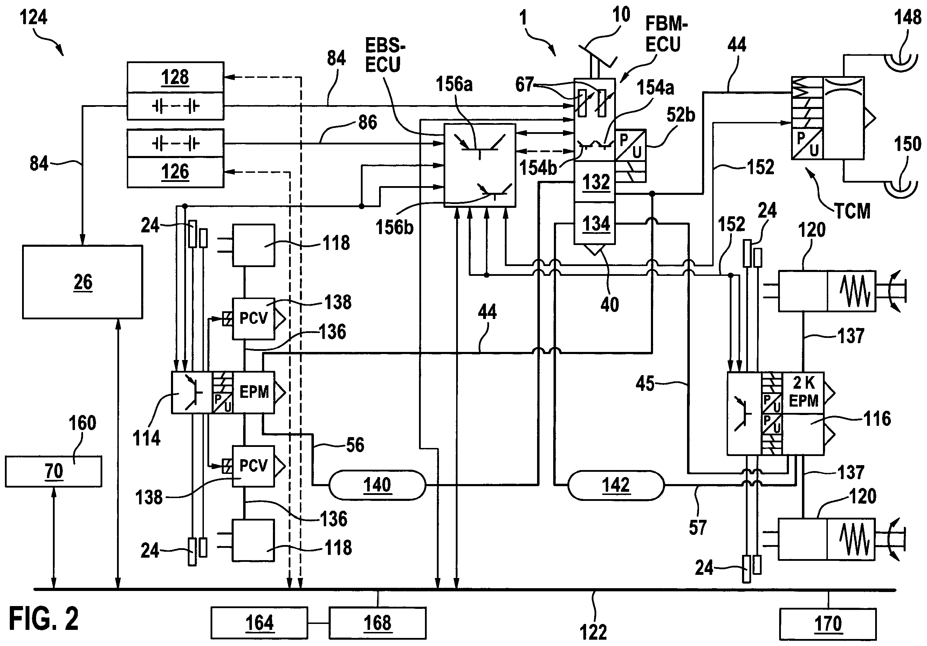

Die Betriebsbremsventileinrichtung 1 hat aus zeichnerischen Vereinfachungsgründen lediglich einen pneumatischen Betriebsbremskreis bzw. einen pneumatischen Kanal 132 bzw. 134, weist aber in der Realität bevorzugt zwei pneumatische Betriebsbremskreise bzw. zwei pneumatische Kanäle 132, 134 auf (siehe **Fig.2**). Zusätzlich zu den pneumatischen Betriebsbremskreisen bzw. den pneumatischen Kanälen 132, 134 ist ein elektrischer Betriebsbremskreis bzw. ein elektrischer Kanal 130 mit einem hier beispielsweise berührungslosen Wegaufnehmer oder Bremswertgeber 67 zur Messung des Betätigungswegs eines Betriebsbremsbetätigungsorgans 10 vorhanden sein. Bei einer solchen elektropneumatischen Betriebsbremsventileinrichtung 1 spricht man auch von einem sog. Fußbremsmodul (FBM).

Die Betriebsbremsventileinrichtung 1 wird bevorzugt in der elektropneumatischen Betriebsbremseinrichtung 124 gemäß **Fig.2** eingesetzt, welche ein elektronisches Bremssystem (EBS) mit Bremsdruckregelung darstellt, um einerseits in zwei nachrangigen pneumatischen (Backup-)Betriebsbremskreisen jeweils einen pneumatischen Backup-Bremssteuerdruck und andererseits in einem vorrangigem elektrischen Betriebsbremskreis ein von einer Bremsanforderung abhängiges elektrisches Signal in eine erste elektronische Bremssteuereinrichtung EBS-ECU und von dort, evtl. angepasst oder korrigiert, in nachgeordnete elektropneumatische Druckregelmodule 114, 116 einzusteuern, welche abhängig von diesen elektrischen, Soll-Bremsdrücke repräsentierenden Signalen einen entsprechenden Ist-Bremsdruck an Radbremszylinder 118, 120 der jeweils zugeordneten Achse (Vorderachse, Hinterachse) aussteuern.

Solche elektropneumatischen Druckregelmodule 114, 116 sind hinlänglich bekannt und beinhalten neben einem Backup-Magnetventil, welches den zugeordneten Backup-Bremssteuerdruck bei intaktem elektro-pneumatischem Bremskreis zurückhält, eine Einlass-Auslass-Magnetventilkombination, welche ausgangsseitig mit einem Relaisventil verbunden ist. Zusätzlich sind in einem solchen Druckregelmodul 114, 116 ein lokales elektronisches Steuergerät sowie ein Drucksensor zur Messung des vom Relaisventil ausgesteuerten Ist-Bremsdrucks integriert. Der vom Drucksensor gemessene Ist-Bremsdruck wird dann mit einem durch das vom elektrischen Kanal der Betriebsbremsventileinrichtung in das Druckregelmodul 114, 116 eingesteuerte Signal repräsentierten Soll-Bremsdruck im Sinne einer Druckregelung abgeglichen.

Damit ist die Betriebsbremsventileinrichtung 1 vorgesehen, um zum einen den elektrischen Betriebsbremskreis als auch wenigstens einen pneumatischen Betriebsbremskreis (Backup-Bremskreis) eines solchen elektronisch geregelten Bremssystems (EBS) zu steuern.

Die Betriebsbremsventileinrichtung 1 hat ein Gehäuse 2, in dem ein Stößelkolben 4 mit einem durch eine Deckelöffnung eines Gehäusedeckels ragenden Stößelaufnahme 6 axial beweglich aufgenommen ist. In die Stößelaufnahme 6 ragt ein Stößel 8 von oben her hinein, welcher mit einem Betriebsbremsbetätigungsorgan 10 in Form einer Fußbremsplatte verbunden ist. Wenn daher der Fahrer die Fußbremsplatte 10 betätigt, drückt der Stößel 8 in die Stößelaufnahme 6 und der Stößelkolben 4 wird durch die Betätigungskraft in **Fig.1** nach unten bewegt.

Der Stößelkolben 4 überträgt die Betätigungskraft auf einen im Gehäuse 2 ebenfalls axial beweglich gelagerten Steuerkolben 12 vorzugsweise über eine Stößelkolben-Druckfeder 14. Der Steuerkolben 12 ist gegenüber der Innenwandung 66 mittels einer Steuerkolben-Druckfeder 46 abgestützt.

Weiterhin steht der Steuerkolben 12 über eine Stößelkolbenstange 5 mit dem Stößelkolben 4 in mechanischer Wirkverbindung, wobei die Stößelkolbenstange 5 mit dem Stößelkolben 4 verbunden ist und in einem als becherförmige Hülse ausgebildeten oberen Steuerkolbenstange 7 des Steuerkolbens 12 axial anschlagen kann, wenn die Stößelkolbenstange 5 den Boden der hülsenförmigen oberen Steuerkolbenstange 7 erreicht hat, wenn z.B. der Stößelkolben 4 auf den Steuerkolben 12 infolge einer Betätigung des Betriebsbremsbetätigungsorgans zubewegt wird. Andererseits kann die Stößelkolbenstange 5 in der oberen Steuerkolbenstange 7 gleiten, wenn der Stößelkolben 4 vom Steuerkolben 12 wegbewegt wird.

Auf der anderen Seite des Steuerkolbens 12 ist an einer unteren Steuerkolbenstange 16 ein Auslasssitz 32 eines Doppelsitzventils 34 ausgebildet, welcher gegen einen im Gehäuse 2 axial beweglich gelagerten, becherförmigen und hohlen Ventilkörper 36 des Doppelsitzventils 34 dichtet oder von diesem abgehoben, einen Strömungsquerschnitt zwischen einer Arbeitskammer 38 und einer kopfseitigen Durchgangsöffnung im Ventilkörper 36 freigibt, welche zu einem Entlüftungsanschluss 40 führt. Diese Situation ist in **Fig.1** dargestellt.

Die Arbeitskammer 38 steht mit einem Anschluss 42 für einen pneumatischen Betriebsbremskreis in Verbindung, an welchen eine zu einem elektropneumatischen Druckregelmodul 114, 166 einer Achse (Vorderachse, Hinterachse) führende Druckleitung 44 oder 45 angeschlossen ist (Fig.2). In einem solchen Druckregelmodul 114, 116 ist ein Backup-Magnetventil integriert, welches den in der Druckleitung 44, 45 geführten Druck bei intaktem elektrischem Betriebsbremskreis gegenüber an das Druckregelmodul 114, 116 angeschlossene Radbremszylinder 118 bzw. 120 absperrt und bei defektem elektrischem Betriebsbremskreis durchleitet. Hierfür ist es beispielsweise als 2/2-Wegemagnetventil mit stromlos federbelasteter Öffnungsstellung und bestromter Sperrstellung ausgebildet.

Eine Steuerkammer 22 ist zwischen dem Stößelkolben 4 und der zu diesem weisenden Fläche des Steuerkolbens 12 ausgebildet. Dabei mündet ein Anschluss 48 am Gehäuse 2 in die erste Steuerkammer 22.

An den Anschluss 48 ist ein Ausgangsanschluss 50 einer Magnetventileinrichtung 52 angeschlossen ist, welche an ihrem Eingangsanschluss 54 mit einer an einen Druckluftvorrat angeschlossenen Vorratsdruckleitung 56 in Verbindung steht. Weiterhin ist an der Betriebsbremsventileinrichtung 1 ein Vorratsanschluss 58 vorhanden, an welchen ebenfalls die Vorratsdruckleitung 56 angeschlossen ist und welche mit einer Vorratskammer 60 in Verbindung steht.

Der Ventilkörper 36 ist mittels einer am Boden des Gehäuses 2 und am Inneren des Ventilkörpers 36 abgestützten Ventilkörper-Druckfeder 62 gegen einen Einlasssitz 64 des Doppelsitzventils 34 gedrängt, welcher an einem radial inneren Rand einer zentralen Durchgangsbohrung einer weiteren Innenwandung 66 des Gehäuses 2 ausgebildet ist. Im gegen die Wirkung der Ventilkörper-Druckfeder 62 von dem Einlasssitz 64 abgehobenen Zustand des Ventilkörpers 36 wird ein Strömungsquerschnitt zwischen dem Vorratsanschluss 58 bzw. der Vorratskammer 60 und der Arbeitskammer 38 freigegeben, welcher eine Strömung von unter Vorratsdruck stehender Druckluft in den Anschluss 42 für den Betriebsbremskreis, d.h. in die Bremsdruckleitung ermöglicht, um die Radbremszylinder der betreffenden Achse bzw. des betreffenden Bremskreises zu belüften.

Wie bereits oben erwähnt, ist in **Fig.1** die Stellung "Fahren" der Betriebsbremsventileinrichtung 1 gezeigt, in welcher der Auslasssitz 32 vom Ventilkörper 36 abgehoben und der Anschluss 42 für den Betriebsbremskreis und damit auch dessen Radbremszylinder mit dem Entlüftungsanschluss 40 verbunden sind. Dadurch sind die aktiven pneumatischen Radbremszylinder dieses Bremskreises entlüftet und damit gelöst.

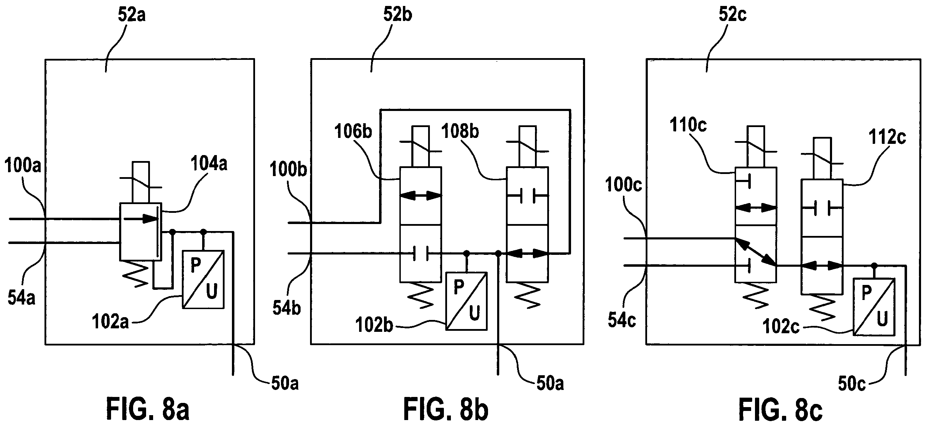

Die Magnetventileinrichtung 52, von welcher einige Ausführungsformen in **Fig.8a** bis **Fig.8b** gezeigt sind, ermöglicht eine Be- oder Entlüftung der ersten Steuerkammer 22 und wird von einer zweiten elektronischen Bremssteuereinrichtung FBM-ECU gesteuert, welche später noch näher beschrieben wird.

In dem Gehäuse 2 sind weiterhin zwei redundante, vorzugsweise axial hintereinander angeordnete und bevorzugt berührungslos wirkende Wegsensoren 67 im axialen Bereich des Stößelkolbens 4 als Bremswertgeber angeordnet, um dessen Betätigungsweg bzw. den Betätigungsgrad zu messen, welcher proportional zum Betätigungsweg bzw. Betätigungsgrad des Betriebsbremsbetätigungsorgans 10 ist. Die Signale dieser Wegsensoren 67 werden beispielsweise in dem elektrischen Kanal der Betriebsbremsventileinrichtung 1 verwendet und in die zweite elektronische Bremssteuereinrichtung FBM-ECU eingesteuert, welches diese Signale aufbereitet und dadurch z.B. datenbusfähig macht und über eine Schnittstelle 13 in eine Datenkommunikationsleitung, z.B. einen Datenbus 122 einsteuert, an den die erste elektronische Bremssteuereinrichtung EBS-ECU angeschlossen ist. Insofern stellt die zweite elektronische Bremssteuereinrichtung FBM-ECU (auch) eine elektronische Auswerteeinrichtung für die Signale der Wegsensoren 67 dar.

Die zweite elektronische Bremssteuereinrichtung FBM-ECU, die Magnetventileinrichtung 52 und die zugeordnete Verkabelung bzw. pneumatische Verrohrung oder pneumatischen Leitungen bilden zusammen mit den im Gehäuse 2 angeordneten Bauteilen der Betriebsbremsventileinrichtung 1 vorzugsweise eine Baueinheit, wobei die zweite elektronische Bremssteuereinrichtung FBM-ECU, die Magnetventileinrichtung 52 und die zugeordnete Verkabelung bzw. pneumatische Verrohrung oder pneumatischen Leitungen auch in einem eigenen Gehäuse untergebracht sein können, welches dann beispielsweise an das Gehäuse 2 angeflanscht ist. Alternativ kann auch eine räumlich getrennte Anordnung des Gehäuses 2 der Betriebsbremsventileinrichtung 1 einerseits und der zweiten elektronischen Bremssteuereinrichtung FBM-ECU und der ersten Magnetventileinrichtung 52 andererseits vorgesehen werden. Schließlich können auch die zweite elektronische Bremssteuereinrichtung FBM-ECU und die Magnetventileinrichtung 52 in dem Gehäuse 2 der Betriebsbremsventileinrichtung 1 integriert sein.

Wenn nun der Fahrer das Betriebsbremsbetätigungsorgan 10 der Betriebsbremsventileinrichtung 1 betätigt, was einer Fahrerbremsanforderung entspricht, so wird der Stößelkolben 4 nach unten verschoben, wobei der Stößelkolben 5 gegen den Boden der becherförmigen Hülse 7 gedrängt und der Steuerkolben 12 ebenfalls nach unten verschoben wird, bis der Auslasssitz 32 gegen den Ventilkörper 36 dichtet und damit die Verbindung zwischen dem Anschluss 42 für den Betriebsbremskreis und dem Entlüftungsanschluss 40 verschließt, so dass keine weitere Entlüftung der zugeordneten Radbremszylinder 118, 120 mehr erfolgen kann.

Bei weiter gehender Betätigung des Betriebsbremsbetätigungsorgans 10 auf die Fahrerbremsanforderung hin wird dann der Ventilkörper 36 mit an ihm anliegenden Auslasssitz 32 unter Abheben vom Einlasssitz 64 nach unten gedrängt. Dadurch gelangt Druckluft unter Vorratsdruck von der Vorratskammer 60 in die Arbeitskammer 38 und von dort in den Anschluss 42 für den Betriebsbremskreis bzw. in die zugeordneten Radbremszylinder, um diese zu belüften und damit zuzuspannen. Dabei handelt es sich um eine reine Fahrerbremsung, bei welcher aufgrund der auf das Betriebsbremsbetätigungsorgan 10 vom Fahrer fahrerbremsanforderungsabhängig ausgeübten Betätigungskraft über die Stößelkolben-Druckfeder 14 eine erste Betätigungskraft auf den Steuerkolben 12 ausgeübt wird, welche diesen letztlich in seine Belüftungsstellung stellt.

Bei einer solchen rein durch eine Fahrerbremsanforderung initiierten Bremsung ist die Magnetventileinrichtung 52 mittels der zweiten elektronischen Bremssteuereinrichtung FBM-ECU in Entlüftungsstellung gesteuert, in welcher die erste Steuerkammer 22 mit der Atmosphäre in Verbindung steht, zur Vermeidung von Druckeffekten, die infolge der Expansion der ersten Steuerkammer 22 entstehen.

Je nach Modulation des in die Steuerkammer 22 eingesteuerten pneumatischen Steuerdrucks durch die Magnetventileinrichtung 52 ist es dann möglich, eine definierte zweite Betätigungskraft am zweiten Steuerkolben 12 einzustellen, was wiederum in einer entsprechenden Bremskraft resultiert, so dass die Einstellung einer beliebigen Bremskraft zwischen dem Wert Null und einer aus dem Vorratsdruck in der Vorratsdruckleitung 56 bzw. 57 resultierenden maximalen Bremskraft möglich ist. Im vorliegenden Fall wirkt die zweite Betätigungskraft beispielsweise richtungsgleich und parallel in Bezug auf die erste Betätigungskraft. Es ist aber auch eine gegenläufige Wirkrichtung der zweiten Betätigungskraft denkbar.

Wenn bei der Ausführungsform von **Fig.1** ohne vorliegende Fahrerbremsanforderung die Magnetventileinrichtung 52 mittels der zweiten elektronischen Bremssteuereinrichtung FBM-ECU in Belüftungsstellung gestellt wird, wird die erste Steuerkammer 22 mit einem pneumatischen Steuerdruck beaufschlagt, welcher wiederum eine hier nach unten gerichtete zweite Betätigungskraft am Steuerkolben 12 erzeugt, welcher dann wie bei der oben beschriebenen Fahrerbetätigung welche diesen letztlich in seine Belüftungsstellung stellt.

Weiterhin wirkt dann der in der ersten Steuerkammer 22 herrschende Steuerdruck auch auf den Stößelkolben 4 und damit auf das Betriebsbremsbetätigungsorgan 10 zurück, was der Fahrer an seinem Fuß spüren kann, wenn er das Betriebsbremsbetätigungsorgan 10 berührt (Pedalrückwirkung). Damit kann der Fahrer eine Einleitung einer automatischen Bremsung am Fuß spüren.

Neben einer durch den Fahrer initiierten Betriebsbremsung und einer ohne Zutun des Fahrers aufgrund von automatisiert erzeugten Betriebsbremsanforderungssignalen initiierten Betriebsbremsung ist weiterhin auch eine kombinierte Betriebsbremsung denkbar, bei welcher mit der Betriebsbremsventileinrichtung 1 sowohl auf eine Fahrerbremsanforderung als auch auf eine automatisch generierte Bremsanforderung hin gebremst wird. Dann wirken auf den Steuerkolben 12 einerseits die erste Betätigungskraft aus der Fahrerbetriebsbremsanforderung wie auch die zweite Betätigungskraft aus der automatisch generierten Bremsanforderung hier beispielsweise gleichsinnig und parallel, wodurch sich die Beträge der beiden Betätigungskräfte am Steuerkolben 12 beispielsweise addieren.

Der von der ersten Magnetventileinrichtung 52 ausgesteuerte Steuerdruck für die erste Steuerkammer 22 kann einer Druckregelung unterworfen sein. In diesem Fall wird der Ist-Steuerdruck am Ausgangsanschluss 50 mit einem Drucksensor gemessen und von der zweiten elektronischen Bremssteuereinrichtung FBM-ECU gegenüber einem vorgegebenen Soll-Steuerdruck durch eine entsprechende Ansteuerung der ersten Magnetventileinrichtung 52 abgeglichen. Die Magnetventileinrichtung 52 bildet dann zusammen mit dem Drucksensor und der zweiten elektronischen Bremssteuereinrichtung FBM-ECU einen Druckregler für den Steuerdruck in der Steuerkammer 22.

In **Fig.8a** bis **Fig.8c** sind nun Beispiele für Magnetventileinrichtungen 52a, 52b, 52c bzw. Steuerdruckregler 52a, 52b, 52c dargestellt, wie sie in den vorangehenden Ausführungsbeispielen den pneumatischen Steuerdruck für die Steuerkammer 22 steuern bzw. regeln. Vereinfachend sind dabei lediglich die in **Fig.1** verwendeten Bezugszeichen angetragen.

Diesen Beispielen ist gemeinsam, dass sie von der zweiten elektronischen Bremssteuereinrichtung FBM-ECU gesteuert werden, einen Eingangsanschluss 54a, 54b, 54c aufweisen, welcher über die Vorratsdruckleitung 56 mit dem Druckluftvorrat verbunden ist, sowie einen Ausgangsanschluss 50a, 50b, 50c, welcher jeweils mit der ersten Steuerkammer 22 oder mit der zweiten Steuerkammer 24 in Verbindung steht oder in Verbindung gebracht wird. Weiterhin weisen alle Ausführungen eine Entlüftung 100a, 100b, 100c auf sowie einen Drucksensor 102a, 102b, 102c zum Messen des Ist-Steuerdrucks am Ausgangsanschluss 50a, 50b, 50c, so dass in Verbindung mit entsprechenden Algorithmen in der zweiten elektronischen Bremssteuereinrichtung FBM-ECU, welcher das am Ausgangsanschluss 50a, 50b, 50c anstehende Ist-Steuerdrucksignal gemeldet wird, eine Druckregelung des ausgesteuerten Steuerdrucks möglich ist bzw. auch durchgeführt wird.

Bei der Ausführung von **Fig.8a** sorgt ein Proportionalventil 104a für einen entsprechend dem elektrischen Steuersignal (proportional) ausgesteuerten Steuerdruck am Ausgangsanschluss 50a, wobei ebenfalls eine Be- und Entlüftung möglich ist. Bei der Ausführung von **Fig.8b** ist eine Einlass-/Auslassventilkombination aus zwei 2/2-Wege-Magnetventilen 106b, 108b vorgesehen, wobei das mit dem Eingangsanschluss 54b direkt verbundene Einlassventil 106b unbestromt geschlossen und bestromt geöffnet und das Auslassventil 108b unbestromt geöffnet und bestromt geschlossen ist. Nach **Fig.8c** wird als Magnetventileinrichtung 52c ein 3/2-Wege-Magnetventil 110c als Be- und Entlüftungsventil mit einer Belüftungsstellung und einer Entlüftungsstellung in Kombination mit einem 2/2-Wege-Magnetventil 112c als Halteventil verwendet, welches in seiner Sperrstellung den Druck am Ausgangsanschluss 50c hält.

Eine solche Magnetventileinrichtung 52a, 52b, 52c kann in jeder der oben beschriebenen Ausführungsformen in Kombination mit dem Drucksensor 102 als Steuerdruckregler verwendet werden, der die zweite elektronische Bremssteuereinrichtung FBM-ECU einschließt, um den am Ausgang 50a, 50b, 50c anstehenden Steuerdruck zu regeln.

**Fig.2** zeigt einen schematischen Schaltplan einer bevorzugten Ausführungsform einer elektropneumatischen Betriebsbremseinrichtung 124 eines zur Ankopplung eines Anhängers geeigneten Zugfahrzeugs mit einer oben beschriebenen Betriebsbremsventileinrichtung 1. Lediglich exemplarisch wird dort die Betriebsbremsventileinrichtung 1 gemäß **Fig.1** verwendet, wobei dort beispielsweise ein elektrischer Betriebsbremskreis und zwei pneumatische Betriebsbremskreise vorhanden sind.

Die elektropneumatische Betriebsbremseinrichtung 124 bzw. deren erste elektronische Bremssteuereinrichtung EBS-ECU wird von einer ersten elektrischen Energiequelle 126 mit elektrischer Energie versorgt, die Bestandteil des elektrischen Betriebsbremskreises ist und unabhängig von einer zweiten elektrischen Energiequelle 128 ist, welche beispielsweise die Betriebsbremsventileinrichtung 1 und insbesondere deren zweite elektronische Bremssteuereinrichtung FBM-ECU mit elektrischer Energie versorgt.

Bei der Betriebsbremsventileinrichtung 1 ist der elektrische Kanal 130 für den elektrischen Betriebsbremskreis, der pneumatische Vorderachskanal 132 für den pneumatischen Vorderachsbetriebsbremskreis sowie der pneumatische Hinterachskanal 134 für den pneumatischen Hinterachsbetriebsbremskreis erkennbar. Erkennbar sind auch die Druckleitungen 44, 45, welche den im Vorderachskanal 132 bzw. im Hinterachskanal 134 herrschenden Druck dem zugeordneten Druckregelmodul 114 bzw. 116 zuführen, wo dieser Druck durch das integrierte Backup-Magnetventil zunächst gegenüber den Radbremszylindern 118, 120 abgesperrt wird. Das der Hinterachse zugeordnete Druckregelmodul 116 ist beispielsweise ein 2-Kanal-Druckregelmodul, an der Vorderachse ist demgegenüber ein 1-Kanal-Druckregelmodul 114 verbaut, welches über Bremsdruckleitungen, in die ABS-Drucksteuerventile 138 integriert sind, mit den Radbremszylindern 118 an der Vorderachse in Verbindung steht. Die ABS-Drucksteuerventile werden im Falle von unzulässigem Bremsschlupf von der ersten elektronischen Bremssteuereinrichtung EBS-ECU in bekannter Weise angesteuert, um den Bremsschlupf an den Rädern der Vorderachse an einen zulässigen Bremsschlupf anzupassen. Die Bremsschlupfregelung an den Rädern der Hinterachse erfolgt mittels des dortigen 2-Kanal-Druckregelmoduls 116, welches über Bremsdruckleitungen 137 mit den zugeordneten Radbremszylindern verbunden ist. Zur Radschlupfmessung sind Raddrehzahlsensoren 24 an jedem Rad angeordnet. In die erste elektronische Bremssteuereinrichtung EBS-ECU sind beispielsweise Regelroutinen einer ESC- (Electronic Stabilty Control), ASR-(Antriebsschlupfregelung) und ABS-(Antiblockiersystem, Bremsschlupfregelung) Regelung implementiert.

Vorzugsweise sind für die beiden Betriebsbremskreise (Vorderachse, Hinterachse) jeweils ein eigener Druckluftvorrat 140, 142 vorgesehen, welche jeweils über eine Vorratsdruckleitung 144, 146 einerseits an den jeweiligen pneumatischen Kanal 132, 134 des Betriebsbremsventils und andererseits an die Druckregelmodule 114, 116 angeschlossen sind. Die Druckregelmodule 114, 116 beinhalten eine Einlass/Auslassventilkombination sowie ein von dieser pneumatisch angesteuertes Relaisventil, wobei jeweils abhängig von einer Ansteuerung durch die erste elektronische Bremssteuereinrichtung EBS-ECU aus dem Vorratsdruck jeweils ein Bremsdruck moduliert und in die Bremsdruckleitungen 136, eingesteuert wird. Weiterhin ist in den Druckregelmodulen 114, 116 für jeden Kanal bzw. in einem Anhängersteuermodul TCM jeweils ein Drucksensor integriert, der den jeweils herrschenden Ist-Bremsdruck in den Bremsdruckleitungen 136, 137 bzw. am Kupplungskopf "Bremse" misst und in lokale elektronische Steuereinrichtungen rückkoppelt, die jeweils in den Druckregelmodulen 114, 116 bzw. in dem Anhängersteuermodul TCM integriert sind, um eine Bremsdruckregelung durch Vergleich mit einem Soll-Bremsdruck in bekannter Weise durchführen zu können.

Über beispielsweise die dem pneumatischen Vorderachsbremskreis zugeordnete Druckleitung 44 wird das hinlänglich bekanntes Anhängersteuermodul TCM redundant druckluftgesteuert, welches priorisiert ebenfalls von der ersten elektronischen Bremssteuereinrichtung EBS-ECU elektrisch gesteuert wird. Das Anhängersteuermodul TCM wird außerdem von einem der Druckluftvorräte 140 oder 142 mittels der Druckluftvorratsleitung 144 oder 146 druckluftversorgt, was aber in **Fig.2** nicht gezeigt ist. Ausgangsseitig steht das Anhängersteuermodul TCM mit einem Kupplungskopf "Bremse" 148 und einem Kupplungskopf "Vorrat" 150 in Verbindung, um die Anhängerbremsen in bekannter Weise zu steuern.

Es versteht sich, dass die Druckregelmodule 114, 116, das Anhängersteuermodul TCM sowie die ABS-Drucksteuerventile 138 jeweils mittels einer elektrischen Steuerleitung 152 mit der ersten elektronischen Bremssteuereinrichtung EBS-ECU verbunden sind.

Zu erkennen sind außerdem die vorzugsweise in die z.B. nach **Fig.1** ausgebildete Betriebsbremsventileinrichtung 1 zusammen mit der z.B. beispielsweise in ihr integrierten zweiten elektronischen Bremssteuereinrichtung FBM-ECU sowie die Magnetventileinrichtung 52b, die beispielsweise nach **Fig.8b** eine Einlass-/Auslassventilkombination 106b, 108b sowie einen Drucksensor 102b enthält. Bei dem gezeigten Ausführungsbeispiel sind diese Komponenten beispielsweise in einem eigenen Gehäuse untergebracht, welches an das Gehäuse der Betriebsbremsventileinrichtung 1 angeflanscht ist. Weiterhin sind auch die redundant vorhandenen Bremswertgeber 67 sichtbar. Die zweite elektronische Bremssteuereinrichtung FBM-ECU beinhaltet beispielsweise zwei redundante, sich gegenseitig überwachende Mikroprozessoren 154a, 154b. In gleicher Weise verfügt auch die erste elektronische Bremssteuereinrichtung EBS-ECU über zwei redundante Mikroprozessoren 156a, 156b. Die Raddrehzahlsensoren 24 an den Rädern melden außerdem die jeweilige Raddrehzahl an die lokalen Steuergeräte in den Druckregelmoduln 114, 116, die sie dann an die erste elektronische Bremssteuereinrichtung EBS-ECU weiterschleifen.

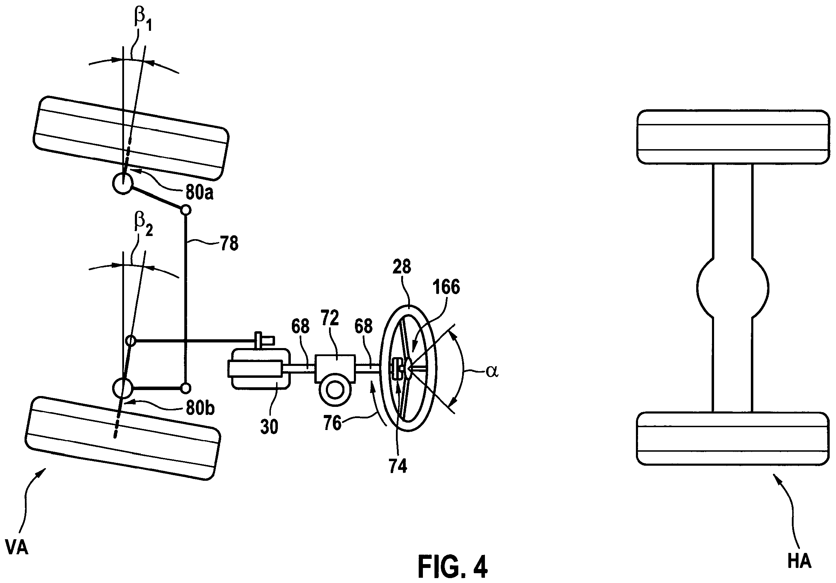

Die elektrische Ausrüstung umfasst weiterhin eine elektromechanische Lenkreinrichtung 26 mit beispielsweise durchgehender mechanischer Verbindung zwischen einem Lenkrad 28 und einem Lenkgetriebe 30 (Fig.4). Ein elektronisches Lenksteuergerät 162 der Lenkeinrichtung 26 kommuniziert mit dem Datenbus 122, an welchen auch die erste elektronische Bremssteuereinrichtung EBS-ECU, die zweite elektronische Bremssteuereinrichtung FBM-ECU sowie ein elektronisches Steuergerät 160 einer Autopiloteinrichtung 70 angeschlossen sind. Das elektronische Steuergerät 160 der Autopiloteinrichtung 70 ist ausgebildet, dass es unter anderem die Lenkeinrichtung 26, die elektropneumatische Betriebsbremseinrichtung 124 sowie die Betriebsbremsventileinrichtung 1 bzw. deren Steuergeräte ohne Zutun des Fahrers ansteuert und stellt damit auch ein Fahrerassistenzsystem dar. Damit wird eine zumindest teilweise automatisierte Steuerung der Bremsen und der Lenkung des Fahrzeugs realisiert, bevorzugt in Abhängigkeit von Fahrbetriebsbedingen wie beispielsweise der Fahrzeuggeschwindigkeit, des Abstands und/oder der Relativgeschwindigkeit in Bezug zu einem vorausfahrenden Fahrzeug, der Fahrzeugstabilität insbesondere auch zusammen mit dem Anhänger usw.. Hierzu empfängt die Autopiloteinrichtung 70 über hier nicht gezeigte Sensoren Fahrbetriebsbedingungen betreffende Daten.

Die Lenkeinrichtung 26 wird über die zweite Energiequelle 128 mit elektrischer Energie versorgt und die Autopiloteinrichtung 70 beispielsweise ebenfalls. Das Anhängersteuermodul TCM, welches von der ersten elektronischen Bremssteuereinrichtung EBS-ECU elektrisch gesteuert ist, steht einerseits mit einem Kupplungskopf "Bremse" 148 und andererseits mit einem Kupplungskopf "Vorrat" 150 in Verbindung, wobei an diese Kupplungsköpfe entsprechende, zu dem Anhänger führende Brems- und Vorratsleitungen lösbar angeschlossen sind.

Die elektromechanische Lenkeinrichtung 26 ist im Einzelnen in **Fig.4** dargestellt. Das vom Fahrer über das Lenkrad 28 aufgebrachte Lenkradmoment 76 wird über eine Lenkspindel 68 in einen elektrischen Lenkaktuator 72 eingeleitet, welcher beispielsweise durch einen Elektromotor gebildet wird. An der Lenkspindel 68 ist außerdem ein Lenkradmomentsensor 74 angebracht, welcher das jeweils vom Fahrer über das Lenkrad 28 aufgebrachte Lenkradmoment erfasst und als Lenkradmomentsignal in das elektronische Lenksteuergerät 162 einsteuert, welches an den Datenbus 122 angeschlossen ist (**Fig.2**).

Das elektronische Lenksteuergerät 162 kann grundsätzlich den Lenkaktuator 72 abhängig vom am Lenkrad 28 erfassten Lenkradmoment 76 ansteuern, um ein gegenüber dem vom Fahrer aufgebrachten Lenkradmoment 76 ein zusätzliches Überlagerungsmoment an der Lenksäule 68 zu erzeugen. Deshalb stellt die Lenkeinrichtung hier beispielsweise eine sog. Überlagerungslenkung mit Lenkmomentüberlagerung dar. Anstatt des Lenkradmoments 76 kann auch der jeweilige Lenkradwinkel α durch einen Lenkradwinkelsensor erfasst werden, so dass dann eine Überlagerungslenkung mit Lenkradwinkelüberlagerung vorläge.

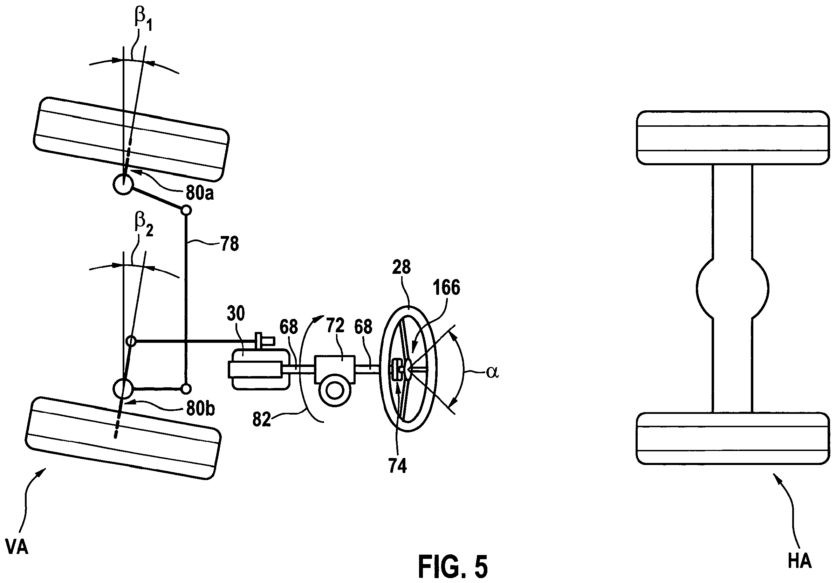

Jedoch kann der Lenkaktuator 72 auch ohne Zutun des Fahrers, d.h. ohne Betätigung des Lenkrads 28 ein Lenkmoment 82 an der Lenkspindel 68 erzeugen (**Fig.5**). Bei dem in **Fig.4** vorliegenden Fall steuert der Lenkaktuator 72 kein Lenkmoment 82 in die Lenkspindel 68 ein, so dass die Lenkkräfte allein von dem vom Fahrer erzeugten Lenkradmoment 76 abgeleitet werden. In **Fig.4** ist die Situation gezeigt, in welcher die Lenkanforderung ausschließlich vom Fahrer ausgeht, welcher das Lenkrad 28 entsprechend betätigt.

Das Lenkgetriebe 30 beinhaltet hier bevorzugt eine hydraulische Servounterstützung und verstärkt das Lenkradmoment 76. Das Lenkgetriebe 30 steuert dann über ein Lenkgestänge 78 Achsschenkel 80a, 80b des linken und rechten Vorderrads der gelenkten Vorderachse VA an, um dort jeweils einen Lenkwinkel β₁ und β₂ für rechts und links einzustellen. Die Hinterachse HA ist hier vorzugsweise ungelenkt.

**Fig.5** zeigt die Situation, in welcher das an der Lenkspindel 68 wirkende Lenkmoment 82 ausschließlich vom Lenkaktuator 72 aufgrund dessen Ansteuerung durch das elektronische Lenksteuergerät 162 erzeugt wird. Diese Ansteuerung erfolgt beispielsweise durch eine von der Autopiloteinrichtung 70 ausgesteuerte Lenkanforderung, welche mittels des Datenbusses 122 übermittelt wird.

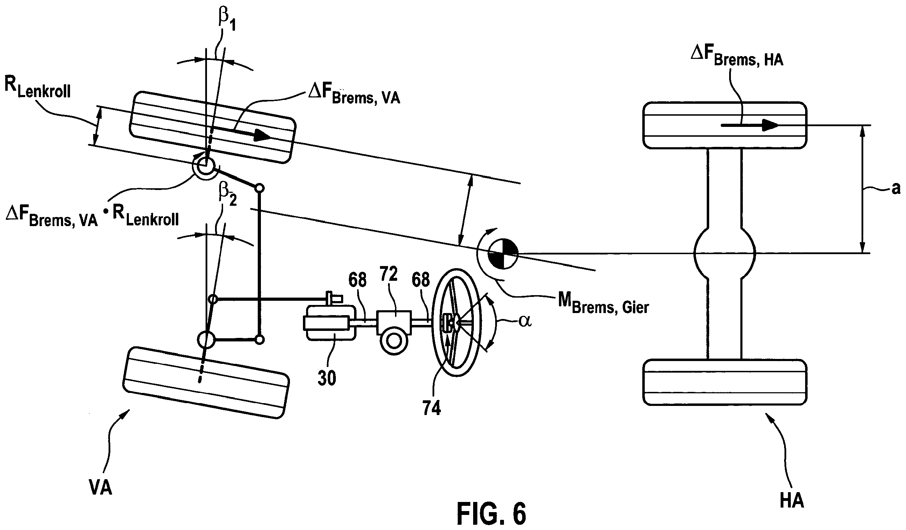

**Fig.6** zeigt eine sog. Lenkbremsung, bei welcher durch gezieltes Einbremsen hier beispielsweise des jeweils linken Rads an der Vorderachse VA und an der Hinterachse HA ein Giermoment M_{Brems,Gier} erzeugt wird, welches das Fahrzeug veranlasst, hier beispielsweise einer Linkskurvenbahn zu folgen. Maßgebend für das Giermoment M_{Brems,Gier} ist der Lenkrollradius R_{Lenkroll} am linken Vorderrad, welcher in Kombination mit der dort wirkenden Bremskraft ΔF_{Brems,VA} ein Bremsmoment ΔF_{Brems,VA}·R_{Lenkroll} erzeugt, weiterhin die halbe Achslänge a, welche in Kombination mit der Bremskraft ΔF_{Brems,HA} ein Bremsmoment ΔF_{Brems,HA} · a erzeugt. Die Lenkbremsanforderung wird hier beispielsweise von der Autopiloteinrichtung 70 initiiert und Lenkanforderungssignale beispielsweise über den Datenbus 122 an die zweite elektronische Bremssteuereinrichtung EBS-ECU übermittelt, welche daraufhin die Einbremsung der beiden Räder veranlasst.

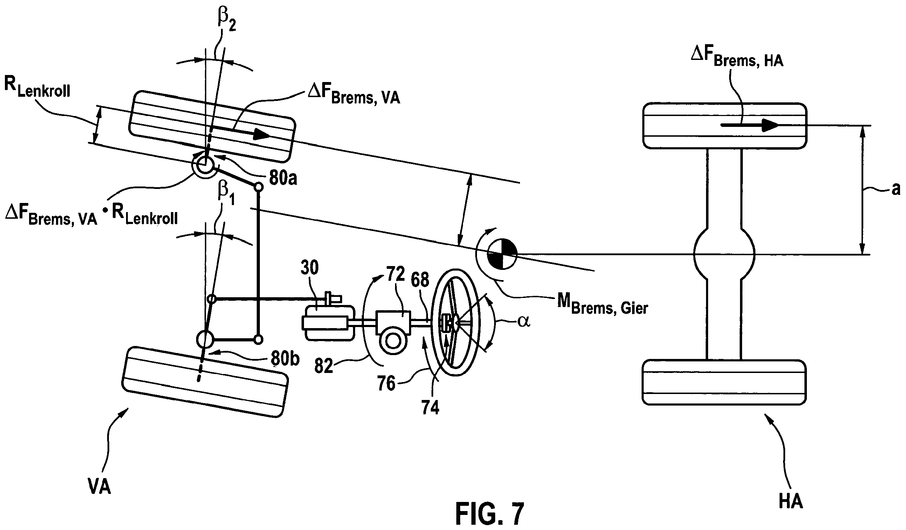

In **Fig.7** ist die Situation dargestellt, bei welcher ein vom Fahrer über das Lenkrad 28 auf die Lenkspindel 68 aufgebrachtes Lenkradmoment 76 einem vom Lenkaktuator 72 aufgebrachten Lenkmoment 82 überlagert wird. Weiterhin ist auch Giermoment M_{Brems,Gier} aufgrund einer Lenkbremsung wirksam. Daher ist hier der Fall gezeigt, bei welchem die in **Fig.4** bis **Fig.6** gezeigten Möglichkeiten einer Lenkung des Fahrzeugs einander überlagert sind.

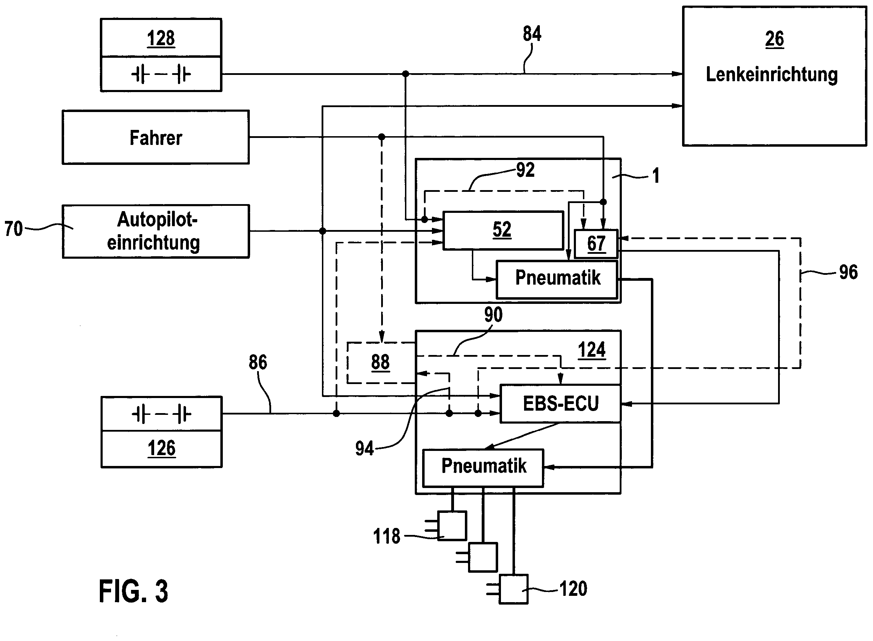

**Fig.3** zeigt nun schematisch verschiedene Ausführungsformen einer Stromversorgung der elektrischen und elektronischen Komponenten der elektrischen Ausrüstung des Fahrzeugs.

Gemäß einer ersten Ausführungsform werden die Lenkeinrichtung 26 sowie die Betriebsbremsventileinrichtung 1 bzw. deren zweite elektronische Bremssteuereinrichtung FBM-ECU von der zweiten elektrischen Energiequelle 128 und die elektro-pneumatische Betriebsbremseinrichtung 124 bzw. deren erste elektronische Bremssteuereinrichtung EBS-ECU von der ersten elektrischen Energiequelle 126 stromversorgt. Die entsprechenden Energieversorgungsleitungen 84, 86 sind in **Fig.3** in durchgezogenen Linien mit dreieckflächenförmigen Pfeilen gekennzeichnet. Optional wird hier der Bremswertgeber 67 der Betriebsbremsventileinrichtung 1 ebenfalls von der zweiten elektrischen Energiequelle 128 stromversorgt, wie durch die gestrichelt gezeichnete Energieversorgungsleitung 92 angedeutet wird.

Dabei ist die elektronische Bremssteuereinrichtung 1 der elektro-pneumatischen Betriebsbremseinrichtung 124 bzw. deren zweite elektronische Bremssteuereinrichtung FBM-ECU ausgebildet, dass sie einen Ausfall oder Fehler in einem die zweite elektrischen Energiequelle 128 beinhaltenden zweiten elektrischen Energieversorgungskreis oder in der Lenkeinrichtung 26 erkennt, wobei dann die elektronische Bremssteuereinrichtung 1 bzw. deren elektronische Steuereinrichtung FBM-ECU die elektro-pneumatische Betriebsbremseinrichtung 124 ansteuert, damit diese von der Autopiloteinrichtung 70 eventuell ausgesteuerte Lenkanforderungssignale in Form von radindividuellen oder seitenindividuellen Bremseingriffen an den Radbremsaktuatoren umsetzt.

Gemäß einer zweiten Ausführungsform ist vorgesehen, dass wenigstens ein beispielsweise von der ersten elektrischen Energiequelle 126 oder von dem ersten Energieversorgungskreis mit elektrischer Energie über eine in gestrichelter Linie dargestellte Energieversorgungsleitung 94 versorgter und vom Betriebsbremsbetätigungsorgan 10 betätigbarer, elektrischer Signalgeber 88 vorgesehen ist, welcher bei einer Betätigung des Betriebsbremsbetätigungsorgans 10 über eine in **Fig.3** in gestrichelter Linie gezeichnete Signalleitung 90 ein elektrisches Betätigungssignal in die zweite elektronische Bremssteuereinrichtung EBS-ECU einsteuert. Dabei kann der elektrische Signalgeber 88 in die elektropneumatische Betriebsbremsventileinrichtung 1 integriert sein und insbesondere durch einen elektrischen Schalter gebildet werden.

Gemäß einer dritten Ausführungsform kann wenigstens ein von der ersten elektrischen Energiequelle 126 oder von dem ersten Energieversorgungskreis mit elektrischer Energie versorgter und vom pneumatischen Bremsdruck oder Bremssteuerdruck in einem oder beiden pneumatischen Betriebsbremssteuerkreis(en) betätigbarer, elektrischer Signalgeber 88 vorgesehen sein, welcher bei einer Betätigung des Betriebsbremsbetätigungsorgans 10 ein elektrisches Betätigungssignal in die erste elektronische Bremssteuereinrichtung EBS-ECU einsteuert. Dabei kann der elektrische Signalgeber 88 wiederum in die elektropneumatische Betriebsbremsventileinrichtung 1 integriert sein und insbesondere durch einen elektrischen Drucksensor gebildet werden. Dieser vom Signalgeber 88 gemessene Bremsdruck oder Bremssteuerdruck steht jeweils in den Druckleitungen 44, 45 der beiden pneumatischen Betriebsbremskreise an (**Fig.2**). Bei der dritten Ausführungsform wird der Bremswertgeber 67 der Betriebsbremsventileinrichtung 1 über eine in gestrichelter Linie gezeichnete Energieversorgungsleitung 96 beispielsweise von der ersten elektrischen Energiequelle 126 stromversorgt.

Bei der zweiten und dritten Ausführungsform ist die erste elektronische Bremssteuereinrichtung EBS-ECU insbesondere ausgebildet, dass sie einen Ausfall oder Fehler in dem die zweiten elektrische Energiequelle 128 beinhaltenden zweiten elektrischen Energieversorgungskreis oder in der Lenkeinrichtung 26 erkennt und bei Erkennen eines solchen Fehlers und bei Vorliegen eines vom Signalgeber 88 erzeugten Betätigungssignals von der Autopiloteinrichtung 70 eventuell ausgesteuerte Lenkanforderungssignale ignoriert und nicht umsetzt.

Es wird daher ein bevorzugt gegenüber dem elektrischen Bremswertgeber 67 zusätzlicher Signalgeber 88 vorgesehen, welcher in Bezug auf die elektropneumatische Betriebsbremseinrichtung 124 vom gleichen ersten elektrischen Versorgungskreis 126 mit elektrischer Energie versorgt wird und erkennt, dass der Fahrer bremsen will. In diesem Fall wird auch bei erkanntem Fehler in der Lenkeinrichtung 26 kein Lenkbremseingriff ausgeführt, da der Fahrer offensichtlich an seinem Platz ist und die Kontrolle übernehmen kann. Die Bremsung erfolgt dann nur mit den pneumatischen Betriebsbremskreisen der elektropneumatischen Betriebsbremseinrichtung 124.

Gemäß einer vierten Ausführungsform ist die elektropneumatische Betriebsbremsventileinrichtung 124 bzw. deren zweite elektronische Bremssteuereinrichtung EBS-ECU zusätzlich von dem ersten, die erste elektrische Energiequelle 126 beinhaltenden Energieversorgungskreis mit elektrischer Energie versorgt. Dabei wird der Bremswertgeber 67 der Betriebsbremsventileinrichtung 1 über die Energieversorgungsleitung 92 von der zweiten elektrischen Energiequelle 128 stromversorgt.

Bei der dritten und vierten Ausführungsform erhält der elektrische Betriebsbremskreis der elektro-pneumatischen Betriebsbremseinrichtung 124 auch bei Ausfall des ersten elektrischen Versorgungskreises oder der ersten elektrischen Energiequelle 126 die Fahrerbremsanforderung und kann diese umsetzen. Dadurch können die Bremsdrücke in den Radbremsaktuatoren 118, 120 zur Lenkbremsung entsprechend modifiziert werden und somit sowohl eine Fahrerbremsanforderung als auch eine Lenkanforderung gleichzeitig umgesetzt werden. Diese Ausführungsformen sind daher auch geeignet, eine Redundanz der Servounterstützung im Lenkgetriebe 30 der Lenkeinrichtung 26 darzustellen.

Gemäß einer weiteren Ausführungsform ist die zweite elektronische Bremssteuereinrichtung FBM-ECU der Betriebsbremsventileinrichtung 1 ausgebildet, dass sie einen Ausfall oder einen Fehler in dem die erste elektrische Energiequelle 126 beinhaltenden ersten elektrischen Energieversorgungskreis oder im elektrischen Betriebsbremskreis der elektro-pneumatischen Betriebsbremseinrichtung 124 erkennt, wobei dann die zweite elektronische Bremssteuereinrichtung FBM-ECU die Betriebsbremsventileinrichtung 1 ansteuert, damit diese eventuell von der Autopiloteinrichtung 70 ausgesteuerten Bremsanforderungssignale in Form von Bremseingriffen an den Radbremsaktuatoren 118, 120 umsetzt.

Weiterhin ist die Funktionsweise der der elektropneumatischen Betriebsbremseinrichtung 124 wie folgt: Bei intaktem vorrangigem elektrischem Betriebsbremskreis der elektropneumatischen Betriebsbremseinrichtung 124 wird bei einer Fahrerbremsanforderung durch Betätigung des Betriebsbremsbetätigungsorgans 10 ein elektrisches Bremsanforderungssignal mittels der Bremswertgeber 67 in der Betriebsbremsventileinrichtung 1 erzeugt und in die zweite elektronische Bremssteuereinrichtung FBM-ECU der Betriebsbremsventileinrichtung 1 eingesteuert, wo diese Signale aufbereitet und über den Datenbus 122 in die erste elektronische Bremssteuereinrichtung EBS-ECU eingeleitet werden. Dort werden die Signale durch höhere Funktionen wie z.B. lastabhängige Bremskraftregelung (ALB), Differenzschlupfregelung etc. korrigiert und dann von dort jeweils ein einen Soll-Bremsdruck repräsentierendes Signal an die Druckregelmodule 114, 166 bzw. an das Anhängersteuermodul TCM eingesteuert, wo durch eine entsprechende Betätigung der jeweils dort vorhandenen Einlass-/Auslassventilkombinationen aus dem Vorratsdruck ein entsprechender Bremsdruck moduliert und in die Radbremszylinder 118, 120 geleitet wird, um diese entsprechend zuzuspannen. Mittels der in den Moduln 114, 116, TCM integrierten Drucksensoren wird der Ist-Bremsdruck gemessen und durch Vergleich mit dem Soll-Bremsdruck, der als diesen repräsentierendes Signal in den lokalen Steuergeräten vorliegt, im Sinne einer Bremsdruckregelung angepasst. Die genannten Vorgänge laufen daher in dem vorrangigen elektrischen Betriebsbremskreis ab.

Parallel hierzu wird durch die Betätigung des Betriebsbremsbetätigungsorgans 10 in den beiden pneumatischen Kanälen 132, 134 und dann auch in den dort angeschlossenen Druckleitungen 44, 45 in oben bereits beschriebener Weise ein Bremsdruck erzeugt, welcher aber noch durch die bestromt in Sperrstellung geschalteten Backup-Magnetventile in den Moduln 114, 116, TCM zurückgehalten werden.

Wenn nun ein Fehler oder Defekt in dem vorrangigen elektrischen Betriebsbremskreis auftritt, sei es dass die erste Energiequelle 126, die erste elektronische Bremssteuereinrichtung EBS-ECU oder eines der lokalen Steuergeräte in den Moduln 114, 116, TCM ausfällt, so schalten die in diesen Moduln integrierten Backup-Magnetventile nun unbestromt in ihre Durchlassstellung, wodurch die in den Druckleitungen 44, 45 anstehenden Bremsdrücke durch die Moduln 114, 116, TCM hindurch an die Radbremszylinder 118, 120 bzw. an den Kupplungskopf "Bremse" geleitet werden, um im Zugfahrzeug bzw. im Anhänger die Radbremsen zuzuspannen. Damit können die Bremsen bei einem Defekt im elektrischen Betriebsbremskreis bisher allerdings nur durch den Fahrer und dann nur rein pneumatisch betätigt werden.

Darüber hinaus ist die zweite elektronische Bremssteuereinrichtung FBM-ECU der elektropneumatischen Betriebsbremsventileinrichtung 1 ausgebildet, dass wenn ein Fehler oder ein Ausfall des vorrangigen elektrischen Betriebsbremskreises der elektropneumatischen Betriebsbremseinrichtung festgestellt worden ist und wenn eine Bremsanforderung vorliegt, sie die Magnetventileinrichtung 52b ansteuert, um wie oben beschrieben, eine zweite Betätigungskraft am Steuerkolben 12 zu erzeugen, welche auch ohne Fahrerbremsanforderung in der Lage ist, den Ventilkörper 36 vom Einlasssitz 64 abzuheben, um die zu den Moduln 114, 116, TCM führenden Druckleitungen 44, 45 mit einem entsprechend der zweiten Betätigungskraft gebildeten Bremsdruck zu belüften. Da die dortigen Backup-Magnetventile unbestromt in ihre Durchlassstellungen geschaltet sind, gelangt dieser Bremsdruck dann in die Radbremszylinder 118, 120 bzw. in den Kupplungskopf "Bremse" 148.

Ein Ausfall oder ein Fehler des elektrischen Betriebsbremskreises wird insbesondere im Rahmen einer Selbstüberwachung durch die erste elektronische Bremssteuereinrichtung EBS-ECU der elektropneumatischen Betriebsbremseinrichtung 124 selbst oder im Rahmen einer Fremdüberwachung durch die zweite elektronische Bremssteuereinrichtung FBM-ECU der elektropneumatischen Betriebsbremsventileinrichtung 1 festgestellt. Denkbar ist aber auch eine Fremdüberwachung durch eine elektronische Steuereinrichtung eines beliebigen dritten Systems. Die Kommunikation erfolgt dabei bevorzugt über den Datenbus 122. Da die zweite elektronische Bremssteuereinrichtung FBM-ECU der Betriebsbremsventileinrichtung 1 von der von der ersten Energiequelle 126 unabhängigen zweiten Energiequelle 128 stromversorgt wird, wird diese Funktionalität auch nicht durch einen Ausfall der ersten Energiequelle 126 verhindert.

Die zweite elektrische Energiequelle kann beispielsweise durch eine separate Batterie, (Doppelschicht-) Kondensatoren, einen weiteren Energiespeicher oder auch ein eigenes Stromerzeugungsgerät (z.B. druckluftbetriebener Generator) dargestellt werden. Die zweite Energiequelle wird bevorzugt auf Ladekapazität und Funktionsfähigkeit überwacht (SOC, SOH, regelmäßiges Laden/Entladen). Diese Überwachung kann beispielsweise mittels der ersten elektronischen Bremssteuereinrichtung EBS-ECU der elektropneumatischen Betriebsbremseinrichtung 124, der zweiten elektronischen Bremssteuereinrichtung FBM-ECU der Betriebsbremsventileinrichtung 1 oder mittels eines sonstigen Systems wie z.B. die Batterieüberwachung einer Hybridantriebssteuerung des Fahrzeugs erfolgen.

Die Bremsanforderung kann dabei von einem beliebigen System des Fahrzeugs stammen, hier insbesondere von der Autopiloteinrichtung 70 oder beispielsweise auch von einer Fahrzeugfolgeregelung (ACC, Adaptive Cruise Control), durch welche der Abstand bzw. die Relativgeschwindigkeit zu einem vorausfahrenden Fahrzeug konstant gehalten wird. Dann kann die Funktionalität eines solchen ACC-Systems auch dann aufrechterhalten werden, wenn der elektrische Betriebsbremskreis der Betriebsbremsvorrichtung 124 ausgefallen ist.

Die automatisch generierte Bremsanforderung bzw. das automatisch generierte Bremsanforderungssignal wird dann als elektrisches Bremsanforderungssignal bevorzugt über den Datenbus 122 und die Schnittstelle 13 in die zweite elektronische Bremssteuereinrichtung FBM-ECU der Betriebsbremsventileinrichtung 1 eingesteuert, um die zweite Betätigungskraft am Steuerkolben 12 zu erzeugen. Da diese Schnittstelle 13 bevorzugt an den Datenbus 122 angeschlossen ist, über welche nicht nur die Kommunikation mit der ersten elektronischen Bremssteuereinrichtung EBS-ECU der Betriebsbremseinrichtung 124 sondern auch mit elektronischen Steuereinrichtungen einer Anzahl von weiteren elektronischen Fahrzeugsystemen erfolgt, welche insbesondere ein elektronisches Steuergerät 160 der Autopiloteinrichtung 70 oder ein elektronisches Steuergerät eines Fahrerassistenzsystem wie ACC umfassen kann, kann das Bremsanforderungssignal von einem beliebigen System des Zugfahrzeugs automatisch generiert werden.

Eine in **Fig.2** schematisch dargestellte und Sensorsignale liefernde Sensoreinrichtung 164 umfassend wenigstens einen der folgenden Sensoren: Die Raddrehzahlsensoren 24, welcher die Raddrehzahlen der zugeordneten Fahrzeugräder erfassen, einen hier nicht explizit gezeigten Längsbeschleunigungssensor, welcher die Längsbeschleunigung des Fahrzeugs erfasst, einen hier nicht explizit gezeigten Querbeschleunigungssensor, welcher die Querbeschleunigung des Fahrzeugs erfasst, einen hier nicht explizit gezeigten Gierratensensor, welcher die Gierrate des Fahrzeugs erfasst, sowie einen in **Fig.4** bis **Fig.7** angedeuteten Lenkradwinkelsensor 166, welcher den Lenkradwinkel α des Lenkrads 28 des Fahrzeugs erfasst. Die Sensoreinrichtung 164 ist insbesondere über eine Auswerteelektronik 168 an den Datenbus 122 angeschlossen, welche datenbusfähige Sensorsignale herstellt. Dabei kann die Auswerteelektronik 168 insbesondere in die Sensoreinrichtung 164 integriert sein.

Es ist vorgesehen, dass in der zweiten elektronischen Bremssteuereinrichtung FBM-ECU Bremsschlupf-Regelroutinen und Fahrdynamik-Regelroutinen implementiert sind. Alternativ können dort auch nur Bremsschlupf-Regelroutinen oder nur Fahrdynamik-Regelroutinen integriert sein.

Weiterhin empfängt die zweite elektronische Bremssteuereinrichtung FBM-ECU Sensorsignale der Sensoreinrichtung 164 über den Datenbus 122. Bei Vorliegen einer abhängig von einer Fahrerbremsanforderung oder unabhängig von einer Fahrerbremsanforderung anforderten Bremsung kann dann die zweite elektronische Bremssteuereinrichtung FBM-ECU der elektropneumatischen Betriebsbremsventileinrichtung 1 die zweite Betätigungskraft auch abhängig von den durch die zweite elektronische Bremssteuereinrichtung FBM-ECU empfangenen Sensorsignalen derart erzeugen, dass bei der anforderten Bremsung zumindest eine Bremsschlupfregelung ABS und/oder eine Fahrdynamikregelung ESC durchgeführt wird/werden.

Dann stellt die bisher für eine redundante Umsetzung der durch die Autopiloteinrichtung 70 automatisch erzeugten Bremsanforderungssignale vorgesehene zweite elektronische Bremssteuereinrichtung FBM-ECU nun auch eine im Hinblick auf ABS- und/oder ESC-Funktionen vollständige Redundanz für die erste elektronische Bremssteuereinrichtung EBS-ECU dar. Diese Redundanz ist sowohl für Bremsanforderungssignale gegeben, welche von einer abhängig von einer Fahrerbremsung durch Betätigen eines Bremspedals anforderten Bremsung herrühren oder welche von einer unabhängig von einer Fahrerbremsanforderung anforderten Bremsung herrühren, wie beispielsweise hier von der Autopiloteinrichtung 70.

Bei einer durch Betätigen des Betriebsbremsbetätigungsorgans 10 anforderten Bremsung liegen der zweiten elektronische Bremssteuereinrichtung FBM-ECU ohnehin bereits die von den elektrischen Wegsensoren 67 der Betriebsbremsventileinrichtung 1 die Betätigungssignale vor, aus welchen dann die zweite elektronische Bremssteuereinrichtung FBM-ECU entsprechende Bremsanforderungssignale bildet und diese dann entweder über die zweite Betätigungskraft in dem wenigstens einen pneumatischen Kanal der elektropneumatischen Betriebsbremseinrichtung 1 oder über die elektrische Steuerung der elektropneumatischen Druckregelmodule 114, 116 in dem elektrischen Kanal der elektropneumatischen Betriebsbremseinrichtung 124 umsetzt. Im letzten Fall werden die Bremsanforderungssignale der zweiten elektronischen Bremssteuereinrichtung FBM-ECU dann beispielsweise über den Datenbus 122 und über die erste elektronischen Bremssteuereinrichtung EBS-ECU in die Druckregelmodule 114, 116 eingesteuert, wobei die erste elektronische Bremssteuereinrichtung EBS-ECU die Bremsanforderungssignale zu den Druckregelmodule 114, 116 über hier nicht dargestellte Signalleitungen lediglich durchschleift. Hierfür ist eine Funktionstüchtigkeit oder Stromversorgung der ersten elektronischen Bremssteuereinrichtung EBS-ECU aber nicht notwendige Voraussetzung.

In beiden Fällen wertet für die Realisierung der ABS-Funktion bzw. der Fahrdynamikregel-Funktion die zweite elektronische Bremssteuereinrichtung FBM-ECU in bekannter Weise die Sensorsignale der Sensoreinrichtung 164 aus, welche ihr hier beispielsweise über den Datenbus 122 zugeführt werden. Die ABS-Bremsschlupfregelroutinen benötigen beispielsweise die Raddrehzahlsignale der Raddrehzahlsensoren 24 an den Rädern des Fahrzeugs, um den Bremsschlupf radweise oder achsweise auf einen vorgegebenen Soll-Bremsschlupf einzuregeln und erhält diese Raddrehzahlsignale von der Sensoreinrichtung 164.

Für das Fahrdynamikregelsystem ESC liefert der Lenkradwinkelsensor 166 den Fahrerwunsch hinsichtlich der Fahrtrichtung, die Raddrehzahlsensoren 24, der Querbeschleunigungssensor und der Gierratensensor die das Fahrzeugverhalten beschreibenden Daten. Wenn eine unzulässige Abweichung des Ist-Fahrverhaltens vom Soll-Fahrverhalten gemäß Fahrerwunsch festgestellt wird, greift das Fahrdynamikregelsystem ESC ein. Zusätzlich kann die Fahrdynamikregelung ESC auch die Antriebsleistung der Antriebsmaschine drosseln, um die Fahrzeuggeschwindigkeit zu verringern und um ein Durchdrehen der Antriebsräder zu verhindern. Hierzu kommuniziert die zweite elektronische Bremssteuereinrichtung FBM-ECU vorzugsweise über den Datenbus 122 mit einem an den Datenbus 122 angeschlossenen Motorsteuergerät 170. Bevorzugt beinhalten die in der zweiten elektronischen Bremssteuereinrichtung FBM-ECU implementierten Fahrdynamik-Regelroutinen daher auch eine Routine zur Regelung oder Steuerung der Antriebsleistung einer Antriebsmaschine des Fahrzeugs.

Besonders bevorzugt erzeugen daher die in der zweiten elektronischen Bremssteuereinrichtung FBM-ECU implementierten Bremsschlupf-Regelroutinen die zweite Betätigungskraft auch abhängig von Sensorsignalen der Raddrehzahlsensoren 24 derart, dass bei einer über die zweite elektronische Bremssteuereinrichtung FBM-ECU anforderten Bremsung eine Bremsschlupfregelung (ABS) durchgeführt wird.

Weiterhin bevorzugt erzeugen daher die in der zweiten elektronischen Bremssteuereinrichtung FBM-ECU implementierten Fahrdynamik-Regelroutinen die zweite Betätigungskraft auch abhängig von Sensorsignalen der Raddrehzahlsensoren 24, des wenigstens einen Gierratensensors, des wenigstens einen Querbeschleunigungssensor und des wenigstens einen Lenkradwinkelsensors derart erzeugen, dass bei einer über die zweite elektronische Bremssteuereinrichtung FBM-ECU anforderten Bremsung eine Fahrdynamikregelung ESC durchgeführt wird.

Anstatt über den Datenbus können die Sensorsignale der zweiten elektronischen Bremssteuereinrichtung FBM-ECU auch auf andere, alternative Wege zugeführt werden. Zum einen kann die Sensoreinrichtung 164 die Sensorsignale nämlich direkt in die zweite elektronische Bremssteuereinrichtung FBM-ECU einsteuern, beispielsweise dadurch, dass zwischen der Sensoreinrichtung 164 und der zweiten elektronischen Bremssteuereinrichtung FBM-ECU Signalleitungen und erforderlichenfalls auch Stromversorgungsleitungen gezogen sind.

Gemäß einer weiteren Variante können die Sensoren der Sensoreinrichtung 164 auch jeweils doppelt vorhanden sein, wobei ein erster Sensor eines doppelt vorhandenen Sensors die Sensorsignale in die erste elektronische Bremssteuereinrichtung EBS-ECU und ein zweiter Sensor des doppelt vorhandenen Sensors die Sensorsignale in die zweite elektronische Bremssteuereinrichtung FBM-ECU einsteuert.

Über den Datenbus 122 kann dann die Autopiloteinrichtung 70 bzw. deren elektronisches Steuergerät 160 ein eine unabhängig von einer Fahrerbremsanforderung anforderte Bremsung auslösendes Bremsanforderungssignal und/oder ein eine unabhängig von einer Fahrerlenkanforderung anforderte Lenkung auslösendes Lenkanforderungssignal in die zweite elektronische Bremssteuereinrichtung FBM-ECU einsteuern, wobei das Bremsanforderungssignal und/oder das Lenkanforderungssignal in Abhängigkeit von Fahrbetriebsbedingungen erzeugt wird/werden.

Dann setzt zum einen die zweite elektronische Bremssteuereinrichtung FBM-ECU die von der Autopiloteinrichtung 70 unabhängig von einer Fahrerbremsanforderung anforderte Bremsung durch die Magnetventileinrichtung 52 um, welche die zweite Betätigungskraft auf den Steuerkolben 12 der Betriebsbremsventileinrichtung 1 erzeugt.

Zum andern setzt dann zweite elektronische Bremssteuereinrichtung FBM-ECU das von der Autopiloteinrichtung 70 ausgesteuerte Lenkanforderungssignal dadurch um, dass sie beispielsweise über den Datenbus 122 den elektrischen Lenkaktuator 72 zum Lenken des Fahrzeugs betätigt. Das Lenkanforderungssignal wird hierbei beispielsweise vom Datenbus 122 durch das elektronische Lenksteuergerät 162 in den Lenkaktuator 72 geschleift, ohne dass dieses hierzu funktionsfähig oder stromversorgt sein müsste.

Daher sind in der zweiten elektronischen Bremssteuereinrichtung FBM-ECU beispielsweise auch Lenksteuerroutinen implementiert, welche abhängig von einer Lenkanforderung durch die Autopiloteinrichtung 70 oder durch eine Bedienung des Lenkrads 28 durch den Fahrer das Lenkanforderungssignal erzeugt und in den Lenkaktuator 72 einsteuert.

Daher werden die mit und ohne Zutun des Fahrers erzeugten Lenkanforderungssignale nicht nur in die Lenkeinrichtung 26, sondern auch in die zweite elektronische Bremssteuereinrichtung FBM-ECU eingesteuert, bzw. von der zweiten elektronischen Bremssteuereinrichtung FBM-ECU "mitgelesen".

Damit stellt die zweite elektronische Bremssteuereinrichtung FBM-ECU eine Redundanz für das elektronische Lenksteuergerät 162 der elektro-mechanischen Lenkeinrichtung 26 dar, wenn das elektronische Lenksteuergerät 162 zwar eine abhängig oder unabhängig von einer Fahrerlenkanforderung erzeugtes Lenkanforderungssignal umsetzen soll, aber nicht funktionsfähig oder nicht stromversorgt ist.

Falls daher die erste elektrische Energiequelle 126 ausfällt und demzufolge der die erste elektronische Bremssteuereinrichtung EBS-ECU sowie die Druckregelmodule 114, 116 stromlos sind, so wird mit Hilfe der zweiten elektrischen Energiequelle 128 die elektropneumatische Betriebsbremsventileinrichtung 1 mit den Wegsensoren 67 und die zweite elektronische Bremssteuereinrichtung EBS-ECU mit elektrischer Energie versorgt. Dann werden vom Fahrerbremswunsch abhängige und vom Fahrerbremswunsch unabhängige elektrische Bremsanforderungssignale durch die zweite elektronische Bremssteuereinrichtung EBS-ECU, die Magnetventileinrichtung 52 und die von dieser erzeugte zweite Betätigungskraft in den pneumatischen Bremskreisen pneumatisch umgesetzt und zwar mit voller ABS- und/oder Fahrdynamikregelung.

Wenn dann weiterhin bevorzugt die elektro-mechanische Lenkeinrichtung 26 ebenfalls von der zweiten elektrischen Energiequelle 128 mit elektrischer Energie versorgt ist, dann können auch bei einem Ausfall der ersten elektrischen Energiequelle 126 vom Fahrerlenkwunsch abhängige und vom Fahrerlenkwunsch unabhängige elektrische Lenkanforderungssignale weiterhin durch die elektromechanische Lenkeinrichtung 26 umgesetzt werden. Die elektrischen Lenkanforderungssignale können dann insbesondere auch ohne ein funktionsfähiges elektronisches Lenksteuergerät 162 umgesetzt werden wie oben bereits beschrieben wurde.

### BEZUGSZEICHENLISTE

- EBS-ECU: erste elektronische Bremssteuereinrichtung
- FBM-ECU: zweite elektronische Bremssteuereinrichtung
- TCM: Anhängersteuermodul
- α: Lenkradwinkel
- 1: Betriebsbremsventileinrichtung
- 2: Gehäuse
- 4: Stößelkolben
- 5: Stößelkolbenstange
- 6: Stößelaufnahme
- 7: obere Steuerkolbenstange
- 8: Stößel
- 10: Betriebsbremsbetätigungsorgan
- 12: Steuerkolben
- 13: elektrischer Anschluss
- 14: Stößelkolben - Druckfeder
- 16: untere Steuerkolbenstange
- 22: Steuerkammer
- 24: Raddrehzahlsensor
- 26: Lenkeinrichtung
- 28: Lenkrad
- 30: Lenkgetriebe
- 32: Auslasssitz
- 34: Doppelsitzventil
- 36: Ventilkörper
- 38: Arbeitskammer
- 40: Entlüftungsanschluss
- 42: Anschluss Betriebsbremskreis
- 44: Bremsdruckleitung
- 45: Bremsdruckleitung
- 46: Steuerkolben - Druckfeder
- 48: Anschluss
- 50: Ausgangsanschluss
- 52: Magnetventileinrichtung
- 54: Eingangsanschluss
- 56: Vorratsdruckleitung
- 57: Vorratsdruckleitung
- 58: Vorratsanschluss
- 60: Vorratskammer
- 62: Ventilkörper - Druckfeder
- 64: Einlasssitz
- 66: Innenwandung
- 67: Wegsensor
- 68: Lenkspindel
- 70: Autopiloteinrichtung
- 72: Lenkaktuator
- 74: Lenkradwinkelsensor
- 76: Lenkradmoment
- 78: Lenkgestänge
- 80a/b: Achsschenkel
- 82: Lenkmoment
- 84: Energieversorgungsleitung
- 86: Energieversorgungsleitung
- 88: Signalgeber
- 90: Signalleitung
- 92: Energieversorgungsleitung
- 94: Energieversorgungsleitung
- 96: Energieversorgungsleitung
- 104: Proportionalventil
- 106: 2/2-Wege-Magnetventil
- 108: 2/2-Wege-Magnetventil
- 110: 3/2-Wege-Magnetventil
- 112: 2/2-Wege-Magnetventil
- 114: Druckregelmodul
- 116: Druckregelmodul
- 118: Radbremszylinder
- 120: Radbremszylinder
- 122: Datenbus
- 124: Betriebsbremseinrichtung
- 126: erste Energiequelle
- 128: zweite Energiequelle
- 130: elektrischer Kanal
- 132: pneumatischer Vorderachskanal
- 134: pneumatischer Hinterachskanal
- 136: Bremsdruckleitungen
- 137: Bremsdruckleitungen
- 138: ABS-Drucksteuerventile
- 140: Druckluftvorrat
- 142: Druckluftvorrat
- 144: Vorratsdruckleitung
- 146: Vorratsdruckleitung
- 148: Kupplungskopf "Bremse"
- 150: Kupplungskopf "Vorrat"
- 152: Steuerleitung
- 154a/b: Mikroprozessoren
- 156a/b: Mikroprozessoren
- 160: elektronisches Steuergerät
- 162: elektronisches Lenksteuergerät
- 164: Sensoreinrichtung
- 166: Lenkradwinkelsensor
- 168: Auswerteelektronik
- 170: Motorsteuergerät

## Patentansprüche

1. Elektrische Ausrüstung eines Fahrzeugs mit:
a) Einer als elektropneumatische Betriebsbremseinrichtung (124), insbesondere als elektronisch bremsdruckgeregeltes Bremssystem (EBS) ausgebildeten Betriebsbremseinrichtung, welche eine elektropneumatische Betriebsbremsventileinrichtung (1), eine erste elektronische Bremssteuereinrichtung (EBS-ECU), elektropneumatische Modulatoren (114, 116) sowie pneumatische Radbremsaktuatoren (118, 120) beinhaltet, und mit
b) einer Sensorsignale liefernden Sensoreinrichtung (164) umfassend wenigstens einen der folgenden Sensoren: Wenigstens einen Raddrehzahlsensor (24), welcher die Raddrehzahl wenigstens eines ihm zugeordneten Fahrzeugrads erfasst, einen Längsbeschleunigungssensor, welcher die Längsbeschleunigung des Fahrzeugs erfasst, einen Querbeschleunigungssensor, welcher die Querbeschleunigung des Fahrzeugs erfasst, einen Gierratensensor, welcher die Gierrate des Fahrzeugs erfasst, einen Lenkradwinkelsensor (166), welcher den Lenkradwinkel eines Lenkrads (28) des Fahrzeugs erfasst, wobei
c) die erste elektronische Bremssteuereinrichtung (EBS-ECU) die elektropneumatischen Modulatoren (114, 116) elektrisch steuert und die elektropneumatischen Modulatoren (114, 116) daraufhin pneumatische Bremsdrücke oder Bremssteuerdrücke für die pneumatischen Radbremsaktuatoren (118, 120) erzeugen, wobei
d) die elektropneumatische Betriebsbremsventileinrichtung (1) ein Betriebsbremsbetätigungsorgan (10) sowie innerhalb wenigstens eines elektrischen Betriebsbremskreises wenigstens einen elektrischen Kanal (130) mit wenigstens einem vom Betriebsbremsbetätigungsorgan (10) betätigbaren elektrischen Bremswertgeber (67) zum von einer Betätigung des Betriebsbremsbetätigungsorgans (10) abhängigen Aussteuern von Betätigungssignalen aufweist, sowie wenigstens eine die Betätigungssignale empfangende zweite, von der ersten elektronischen Bremssteuereinrichtung unabhängige elektronische Bremssteuereinrichtung (FBM-ECU), welche abhängig von den Betätigungssignalen Bremsanforderungssignale in die erste elektronische Bremssteuereinrichtung (EBS-ECU) einsteuert, sowie innerhalb wenigstens eines pneumatischen Betriebsbremskreises wenigstens einen pneumatischen Kanal (132, 134), bei welchem durch Betätigung des Betriebsbremsbetätigungsorgans (10) aufgrund einer Fahrerbremsanforderung wenigstens ein Steuerkolben (12) der Betriebsbremsventileinrichtung (1) mit einer ersten Betätigungskraft belastet wird und der Steuerkolben (12) wenigstens ein einen Einlasssitz (64) und einen Auslasssitz (32) beinhaltendes Doppelsitzventil (34) der Betriebsbremsventileinrichtung (1) direkt oder indirekt steuert, um pneumatische Bremsdrücke oder Bremssteuerdrücke für die pneumatischen Radbremsaktuatoren (118, 120) zu erzeugen, und wobei
e) ein die zweite elektronische Bremssteuereinrichtung (FBM-ECU) der elektropneumatischen Betriebsbremsventileinrichtung (1) beinhaltendes Mittel (FMB-ECU, 52) vorgesehen ist, welches zumindest bei Vorliegen einer unabhängig von einer Fahrerbremsanforderung anforderten Bremsung eine zweite Betätigungskraft erzeugt, welche in Bezug zur ersten Betätigungskraft gleichsinnig oder gegensinnig auf den wenigstens einen Steuerkolben (12) wirkt, **dadurch gekennzeichnet, dass**
f) in der zweiten elektronischen Bremssteuereinrichtung (FBM-ECU) Bremsschlupf-Regelroutinen und/oder Fahrdynamik-Regelroutinen implementiert sind, und dass
g) die zweite elektronische Bremssteuereinrichtung (FBM-ECU) Sensorsignale der Sensoreinrichtung (164) empfängt, und dass
h) bei Vorliegen einer abhängig von einer Fahrerbremsung oder unabhängig von einer Fahrerbremsanforderung anforderten Bremsung das die zweite elektronische Bremssteuereinrichtung (FBM-ECU) der elektropneumatischen Betriebsbremsventileinrichtung (1) beinhaltende Mittel (FMB-ECU, 52) die zweite Betätigungskraft auch abhängig von den durch die zweite elektronische Bremssteuereinrichtung (FBM-ECU) empfangenen Sensorsignalen derart erzeugt, dass bei der anforderten Bremsung zumindest eine Bremsschlupfregelung (ABS) und/oder eine Fahrdynamikregelung (ESC) durchgeführt wird.

2. Elektrische Ausrüstung nach Anspruch 1, **dadurch gekennzeichnet, dass** die in der zweiten elektronischen Bremssteuereinrichtung (FBM-ECU) implementierten Bremsschlupf-Regelroutinen die zweite Betätigungskraft auch abhängig von Sensorsignalen des wenigstens einen Raddrehzahlsensors derart erzeugen, dass bei einer über die zweite elektronische Bremssteuereinrichtung (FBM-ECU) anforderten Bremsung eine Bremsschlupfregelung (ABS) durchgeführt wird.

3. Elektrische Ausrüstung nach Anspruch 1 oder 2, **dadurch gekennzeichnet, dass** die in der zweiten elektronischen Bremssteuereinrichtung (FBM-ECU) implementierten Fahrdynamik-Regelroutinen die zweite Betätigungskraft auch abhängig von Sensorsignalen des wenigstens einen Raddrehzahlsensors (24), des wenigstens einen Gierratensensors, des wenigstens einen Querbeschleunigungssensor und des wenigstens einen Lenkradwinkelsensors (166) derart erzeugen, dass bei einer über die zweite elektronische Bremssteuereinrichtung (FBM-ECU) anforderten Bremsung eine Fahrdynamikregelung (ESC) durchgeführt wird.

4. Elektrische Ausrüstung nach Anspruch 3, **dadurch gekennzeichnet, dass** die in der zweiten elektronischen Bremssteuereinrichtung (FBM-ECU) implementierten Fahrdynamik-Regelroutinen auch eine Routine zur Regelung oder Steuerung der Antriebsleistung einer Antriebsmaschine des Fahrzeugs beinhalten.

5. Elektrische Ausrüstung nach einem der vorhergehenden Ansprüche, **dadurch gekennzeichnet, dass** die Sensoreinrichtung (164) die Sensorsignale direkt in die zweite elektronische Bremssteuereinrichtung (FBM-ECU) einsteuert.

6. Elektrische Ausrüstung nach einem der vorhergehenden Ansprüche, **dadurch gekennzeichnet, dass** wenigstens ein Sensor der Sensoreinrichtung (164) doppelt vorhanden ist, wobei ein erster Sensor des doppelt vorhandenen Sensors die Sensorsignale in die erste elektronische Bremssteuereinrichtung (EBS-ECU) und ein zweiter Sensor des doppelt vorhandenen Sensors die Sensorsignale in die zweite elektronische Bremssteuereinrichtung (FBM-ECU) einsteuert.

7. Elektrische Ausrüstung nach einem der vorhergehenden Ansprüche, **dadurch gekennzeichnet, dass** sie eine Autopiloteinrichtung (70) oder ein Fahrerassistenzsystem umfasst, welche oder welches ein die unabhängig von einer Fahrerbremsanforderung anforderte Bremsung auslösendes Bremsanforderungssignal und/oder ein eine unabhängig von einer Fahrerlenkanforderung anforderte Lenkung auslösendes Lenkanforderungssignal direkt oder indirekt in die zweite elektronische Bremssteuereinrichtung (FBM-ECU) einsteuert, wobei das Bremsanforderungssignal und/oder das Lenkanforderungssignal in Abhängigkeit von Fahrbetriebsbedingungen erzeugt wird/werden.

8. Elektrische Ausrüstung nach einem der vorhergehenden Ansprüche, **dadurch gekennzeichnet, dass** sie eine elektro-mechanische Lenkeinrichtung (26) mit oder ohne durchgehende mechanische Verbindung zwischen einem Lenkrad (28) und einem Lenkgetriebe (30) sowie mit einer elektronischen Lenksteuereinrichtung (162) und einem elektrischen Lenksteller (72) beinhaltet, wobei die elektronische Lenksteuereinrichtung (162) ein Lenkanforderungssignal empfängt und abhängig von dem Lenkanforderungssignal den elektrischen Lenksteller (72) zum Lenken des Fahrzeugs betätigt.

9. Elektrische Ausrüstung nach Anspruch 8, **dadurch gekennzeichnet, dass** in der zweiten elektronischen Bremssteuereinrichtung (FBM-ECU) Lenksteuerroutinen implementiert sind, welche abhängig von einer Lenkanforderung durch die Autopiloteinrichtung (70), das Fahrerassistenzsystem oder durch eine Bedienung eines Lenkrads durch den Fahrer das Lenkanforderungssignal erzeugt und in den elektrischen Lenksteller (72) einsteuert.

10. Elektrische Ausrüstung nach einem der vorhergehenden Ansprüche, **dadurch gekennzeichnet, dass** eine mit der Sensoreinrichtung (164) zusammen wirkende Auswerteelektronik (168) vorgesehen ist, welche aus den von der Sensoreinrichtung (164) gelieferten Sensorsignalen datenbustaugliche Sensorsignale bildet und in einen angeschlossenen Datenbus (122) einsteuert, an welchen auch wenigstens die zweite elektronische Bremssteuereinrichtung (FBM-ECU) angeschlossen ist.

11. Elektrische Ausrüstung nach den Ansprüchen 7, 8 oder 9 und 10, **dadurch gekennzeichnet, dass** an den Datenbus (122) wenigstens Folgendes angeschlossen ist: Ein elektronisches Steuergerät (160) der Autopiloteinrichtung (70) und/oder ein elektronisches Steuergerät des Fahrerassistenzsystems, die erste elektronische Bremssteuereinrichtung (EBS-ECU), die zweite elektronische Bremssteuereinrichtung (FBM-ECU), die elektronische Lenksteuereinrichtung (162), die mit der Sensoreinrichtung (162) zusammen wirkende Auswerteelektronik (168) sowie ein Motorsteuergerät (170) einer Antriebsmaschine des Fahrzeugs.

12. Elektrische Ausrüstung nach einem der vorhergehenden Ansprüche, **dadurch gekennzeichnet, dass** die elektropneumatische Betriebsbremseinrichtung (124) von einer ersten elektrischen Energiequelle (126) oder von einem ersten Energieversorgungskreis mit elektrischer Energie versorgt ist, welche oder welcher unabhängig von einer zweiten elektrischen Energiequelle (128) oder einem zweiten Energieversorgungskreis ist, welche oder welcher die elektropneumatische Betriebsbremsventileinrichtung (1) und die Sensoreinrichtung mit elektrischer Energie versorgt.

13. Elektrische Ausrüstung nach den Ansprüchen 8 oder 9 und 12, **dadurch gekennzeichnet, dass** die elektro-mechanische Lenkeinrichtung (26) von der zweiten elektrischen Energiequelle (128) oder von dem zweiten Energieversorgungskreis mit elektrischer Energie versorgt ist.

14. Elektrische Ausrüstung nach einem der vorhergehenden Ansprüche, **dadurch gekennzeichnet, dass** das Mittel (ECU, 52) zur Erzeugung der zweiten Betätigungskraft wenigstens einen elektrischen, elektrohydraulischen oder elektropneumatischen Aktuator (52) beinhaltet, welcher durch elektrische Signale der zweiten elektronischen Bremssteuereinrichtung (FBM-ECU) gesteuert wird.

15. Elektrische Ausrüstung nach Anspruch 14, **dadurch gekennzeichnet, dass** das Mittel (ECU, 52) zur Erzeugung der zweiten Betätigungskraft wenigstens eine elektro-pneumatische Magnetventileinrichtung (52) beinhaltet, welche abhängig von den von der zweiten elektronischen Bremssteuereinrichtung (FBM-ECU) ausgesteuerten elektrischen Signalen wenigstens einen pneumatischen Steuerdruck aussteuert, von welchem die zweite Betätigungskraft abhängig ist.

16. Elektrische Ausrüstung nach Anspruch 15, **dadurch gekennzeichnet, dass** der wenigstens eine, von der wenigstens einen Magnetventileinrichtung (52) ausgesteuerte Steuerdruck mittels einer Sensorik gemessen und durch Abgleich mit einem Sollwert in der zweiten elektronischen Bremssteuereinrichtung (FBM-ECU) geregelt wird, wobei die Sensorik, die Magnetventileinrichtung (52) zusammen mit der zweiten elektronischen Bremssteuereinrichtung (FBM-ECU) einen Steuerdruckregler zur Regelung des pneumatischen Steuerdrucks bilden.

17. Elektrische Ausrüstung nach Anspruch 16 oder 17, **dadurch gekennzeichnet, dass** der pneumatische Steuerdruck in wenigstens eine Steuerkammer (22) der elektropneumatischen Betriebsbremsventileinrichtung (1) einsteuerbar ist, welche von dem wenigstens einen Steuerkolben (12) begrenzt ist, wobei die Steuerkammer (22) derart angeordnet ist, dass sie bei Belüftung eine in Bezug zur ersten Betätigungskraft gleichsinnige oder gegensinnige zweite Betätigungskraft an dem wenigstens einen Steuerkolben (12) bewirkt.

18. Fahrzeug mit einen elektrischen Ausrüstung nach einem der vorhergehenden Ansprüche.

## Claims

1. An electrical apparatus of a vehicle, having:
a) a service brake device designed as an electropneumatic service brake device (124), in particular as an electronically brake pressure-regulated brake system (EBS), which contains an electropneumatic service brake valve device (1), a first electronic brake control device (EBS-ECU), electropneumatic modulators (114, 116) and pneumatic wheel brake actuators (118, 120), and having
b) a sensor device (164) delivering sensor signals, comprising at least one of the following sensors: at least one wheel rotational speed sensor (24) that records the wheel rotational speed of at least one vehicle wheel assigned thereto, a longitudinal acceleration sensor that records the longitudinal acceleration of the vehicle, a transverse acceleration sensor that records the transverse acceleration of the vehicle, a yaw rate sensor that records the yaw rate of the vehicle, a steering wheel angle sensor (166) that records the steering wheel angle of a steering wheel (28) of the vehicle, wherein
c) the first electronic brake control device (EBS-ECU) electrically controls the electropneumatic modulators (114, 116) and the electropneumatic modulators (114, 116) then generate pneumatic brake pressures or brake control pressures for the pneumatic wheel brake actuators (118, 120), wherein
d) the electropneumatic service brake valve device (1) has a service brake actuation member (10) and, within at least one electrical service brake circuit, at least one electrical channel (130) containing at least one electrical brake value transmitter (67), able to be actuated by the service brake actuation member (10), for coupling out actuation signals depending on an actuation of the service brake actuation member (10), and at least one second electronic brake control device (FBM-ECU), receiving the actuation signals and independent of the first electronic brake control device, which second electronic brake control device couples brake request signals into the first electronic brake control device (EBS-ECU) depending on the actuation signals, and, within at least one pneumatic service brake circuit, at least one pneumatic channel (132, 134) in which at least one control piston (12) of the service brake valve device (1) is loaded with a first actuation force by actuating the service brake actuation member (10) on the basis of a driver brake request, and the control piston (12) directly or indirectly controls at least one double-seat valve (34), containing an inlet seat (64) and an outlet seat (32), of the service brake valve device (1) in order to generate pneumatic brake pressures or brake control pressures for the pneumatic wheel brake actuators (118, 120), and wherein
e) a means (FMB-ECU, 52) containing the second electronic brake control device (FBM-ECU) of the electropneumatic service brake valve device (1) is provided, which means generates a second actuation force, at least in the presence of braking requested independently of a driver brake request, that acts on the at least one control piston (12) in the same direction as or in the opposite direction to the first actuation force, **characterized in that**
f) brake slip regulation routines and/or driving dynamics regulation routines are implemented in the second electronic brake control device (FBM-ECU), and **in that**
g) the second electronic brake control device (FBM-ECU) receives sensor signals from the sensor device (164), and **in that**
h) in the presence of braking requested depending on driver braking or requested independently of a driver brake request, the means (FMB-ECU, 52) containing the second electronic brake control device (FBM-ECU) of the electropneumatic service brake valve device (1) generates the second actuation force, including depending on the sensor signals received by the second electronic brake control device (FBM-ECU), such that at least one brake slip regulation operation (ABS) and/or one driving dynamics regulation operation (ESC) is performed in the requested braking.

2. The electrical apparatus as claimed in claim 1, **characterized in that** the brake slip control routines implemented in the second electronic brake control device (FBM-ECU) generate the second actuation force, including depending on sensor signals from the at least one wheel rotational speed sensor, such that brake slip regulation (ABS) is performed in the event of braking requested via the second electronic brake control device (FBM-ECU).

3. The electrical apparatus as claimed in claim 1 or 2, **characterized in that** the driving dynamics regulation routines implemented in the second electronic brake control device (FBM-ECU) generate the second actuation force, including depending on sensor signals from the at least one wheel rotational speed sensor (24), the at least one yaw rate sensor, the at least one transverse acceleration sensor and the at least one steering wheel angle sensor (166) such that driving dynamics regulation (ESC) is performed in the event of braking requested via the second electronic brake control device (FBM-ECU).

4. The electrical apparatus as claimed in claim 3, **characterized in that** the driving dynamics regulation routines implemented in the second electronic brake control device (FBM-ECU) also contain a routine for regulating or controlling the drive power of a drive machine of the vehicle.

5. The electrical apparatus as claimed in one of the preceding claims, **characterized in that** the sensor device (164) couples the sensor signals directly into the second electronic brake control device (FBM-ECU).

6. The electrical apparatus as claimed in one of the preceding claims, **characterized in that** at least one sensor of the sensor device (164) is present in dual form, wherein a first sensor of the sensor present in dual form couples the sensor signals into the first electronic brake control device (EBS-ECU) and a second sensor of the sensor present in dual form couples the sensor signals into the second electronic brake control device (FBM-ECU).

7. The electrical apparatus as claimed in one of the preceding claims, **characterized in that** it comprises an autopilot device (70) or a driver assistance system that couples a brake request signal that triggers braking requested independently of a driver brake request and/or a steering request signal that triggers steering requested independently of a driver steering request directly or indirectly into the second electronic brake control device (FBM-ECU), wherein the brake request signal and/or the steering request signal are/is generated depending on driving operating conditions.

8. The electrical apparatus as claimed in one of the preceding claims, **characterized in that** it contains an electromechanical steering device (26) with or without a continuous mechanical connection between a steering wheel (28) and a steering transmission (30) and with an electronic steering control device (162) and an electrical steering actuator (72), wherein the electronic steering control device (162) receives a steering request signal and actuates the electrical steering actuator (72) independently of the steering request signal so as to steer the vehicle.

9. The electrical apparatus as claimed in claim 8, **characterized in that** steering control routines are implemented in the second electronic brake control device (FBM-ECU), which generates the steering request signal depending on a steering request by the autopilot device (70), the driver assistance system or by the driver operating a steering wheel and then couples it into the electrical steering actuator (72).

10. The electrical apparatus as claimed in one of the preceding claims, **characterized in that** evaluation electronics (168) interacting with the sensor device (164) are provided, which evaluation electronics form sensor signals suitable for a data bus from the sensor signals delivered by the sensor device (164) and couple them into a connected data bus (122) to which at least the second electronic brake control device (FBM-ECU) is also connected.

11. The electrical apparatus as claimed in claims 7, 8 or 9 and 10, **characterized in that** at least the following are connected to the data bus (122): an electronic controller (160) of the autopilot device (70) and/or an electronic controller of the driver assistance system, the first electronic brake control device (EBS-ECU), the second electronic brake control device (FBM-ECU), the electronic steering control device (162), the evaluation electronics (168) interacting with the sensor device (162) and an engine controller (170) of a drive machine of the vehicle.

12. The electrical apparatus as claimed in one of the preceding claims, **characterized in that** the electropneumatic service brake device (124) is supplied with electrical energy by a first electrical energy source (126) or by a first energy supply circuit that is independent of a second electrical energy source (128) or a second energy supply circuit that supplies the electropneumatic service brake valve device (1) and the sensor device with electrical energy.

13. The electrical apparatus as claimed in claims 8 or 9 and 12, **characterized in that** the electromechnical steering device (26) is supplied with electrical energy by the second electrical energy source (128) or by the second energy supply circuit.

14. The electrical apparatus as claimed in one of the preceding claims, **characterized in that** the means (ECU, 52) for generating the second actuation force contains at least one electrical, electrohydraulic or electropneumatic actuator (52) that is controlled by electrical signals from the second electronic brake control device (FBM-ECU).

15. The electrical apparatus as claimed in claim 14, **characterized in that** the means (ECU, 52) for generating the second actuation force contains at least one electropneumatic solenoid valve device (52) that couples out at least one pneumatic control pressure depending on the electrical signals coupled out by the second electronic brake control device (FBM-ECU) and on which control pressure the second actuation force depends.

16. The electrical apparatus as claimed in claim 15, **characterized in that** the at least one control pressure coupled out by the at least one solenoid valve device (52) is measured by a sensor system and regulated through comparison with a setpoint value in the second electronic brake control device (FBM-ECU), wherein the sensor system and the solenoid valve device (52) together with the second electronic brake control device (FBM-ECU) form a control pressure regulator for regulating the pneumatic control pressure.

17. The electrical apparatus as claimed in claim 16 or 17, **characterized in that** the pneumatic control pressure is able to be coupled into at least one control chamber (22) of the electropneumatic service brake valve device (1) that is delimited by the at least one control piston (12), wherein the control chamber (22) is arranged such that, when aerated, it brings about a second actuation force, in the same direction as or in the opposite direction to the first actuation force, on the at least one control piston (12) .

18. A vehicle having an electrical apparatus as claimed in one of the preceding claims.

## Revendications

1. Equipement électrique d'un véhicule comprenant :
a) un dispositif (124) électropneumatique de frein de service, en particulier un dispositif de frein de service, qui est constitué sous la forme d'une système (EBS) de frein à pression de frein régulée électroniquement et qui comporte un dispositif (1) électropneumatique de soupape de frein de service, un premier dispositif (EBS-ECU) électronique de commande de frein, des modulateurs (114, 116) électropneumatiques ainsi que des actionneurs (118, 120) pneumatiques de frein de roue, et comprenant
b) un dispositif (164) capteur, qui donne des signaux de capteur et qui comprend au moins l'un des capteurs suivants : au moins un capteur (24) de la vitesse de rotation d'une roue, qui détecte la vitesse de rotation de roue d'au moins une roue du véhicule, qui lui est associée, un capteur d'accélération longitudinal, qui détecte l'accélération longitudinale du véhicule, un capteur d'accélération transversal, qui détecte l'accélération transversale du véhicule, un capteur du taux de lacet du véhicule, un capteur (166) d'angle du volant, qui détecte l'angle de volant d'un volant (28) du véhicule, dans lequel
c) le premier dispositif (EBS-ECU) électronique de commande de frein commande électriquement les modulateurs (114, 116) électropneumatiques et sur ce, les modulateurs (114, 116) électropneumatiques produisent des pressions de frein ou des pressions de commande de frein pneumatiques pour les actionneurs (118, 120) pneumatiques de frein de roue, dans lequel
d) le dispositif (1) électropneumatique de vanne de frein de service comporte un organe (10) d'actionnement de frein de service ainsi que, dans au moins un circuit électrique de fonctionnement, au moins un canal (130) électrique ayant au moins un donneur (67) électrique de valeurs de frein, pouvant être actionné par l'organe (10) d'actionnement de frein de service, pour la sélection, en fonction d'un actionnement de l'organe (10) d'actionnement du frein de service, de signaux d'actionnement, ainsi qu'au moins un deuxième dispositif (FBM-ECU) électronique de commande de frein, qui reçoit les signaux d'actionnement, qui est indépendant du premier dispositif électronique de commande de frein et qui entre, en fonction des signaux d'actionnement, des signaux de demande de frein dans le premier dispositif (EBS-ECU) électronique de commande de frein ainsi que, dans au moins un circuit pneumatique de frein de service, au moins un canal (132, 134) pneumatique, dans lequel, par actionnement de l'organe (10) d'actionnement de frein de service, sur la base d'une demande de frein du conducteur, au moins un piston (12) de commande du dispositif (1) de vanne de frein de service est soumis à une première force d'actionnement et le piston (12) de commande commande directement ou indirectement au moins un vanne (34) à siège double, comportant un siège (64) d'entrée et un siège (32) de sortie du dispositif (1) de vanne de frein de service, pour produire des pressions de frein ou des pressions de commande de frein pneumatiques pour les actionneurs (118, 120) pneumatiques de frein de roue, et dans lequel
e) il est prévu un moyen (FBM-ECU, 52), qui comporte le deuxième dispositif (FBM-ECU) électronique de commande de frein du dispositif (1) électropneumatique de vanne de frein de service, et qui produit, au moins en présence d'un freinage demandé indépendamment par une demande de frein du conducteur, une deuxième force d'actionnement, qui s'applique dans le même sens que la première force d'actionnement ou dans le sens contraire au au moins un piston (12) de commande, **caractérisé en ce que**
f) dans le deuxième dispositif (FBM-ECU) électronique de commande de frein sont mises en oeuvre des routines de réglage de glissement de freinage et/ou des routines de réglage de dynamique de marche, et ce que
g) le deuxième dispositif (FBM-ECU) électronique de commande de frein reçoit des signaux de capteur du dispositif (164) capteur, et **en ce que**
h) en présence d'un freinage demandé, en fonction d'un freinage de conducteur ou indépendamment d'une demande de freinage du conducteur, le moyen (FBM-ECU, 52), comportant le deuxième dispositif (FBM-ECU) électronique de commande de frein du dispositif (1) électropneumatique de vanne de frein de service, produit la deuxième force d'actionnement également en fonction des signaux de capteur reçus par le deuxième dispositif (FBM-ECU) électronique de commande de frein, de manière à effectuer, lorsque le freinage est demandé, au moins une régulation (ABS) de glissement de freinage et/ou une régulation (ESC) de dynamique de marche.

2. Equipement électrique suivant la revendication 1, **caractérisé en ce que** les routines de régulation du glissement de freinage, mises en oeuvre dans le deuxième dispositif (FBM-ECU) électronique de commande de frein, produisent la deuxième force d'actionnement également en fonction de signaux de capteur du au moins un capteur de vitesse de rotation d'une roue, de manière à effectuer une régulation (ABS) de glissement de freinage, lorsqu'un freinage est demandé par le deuxième dispositif (FBM-ECU) électronique de commande de frein.

3. Equipement électrique suivant la revendication 1 ou 2, **caractérisé en ce que** les routines de réglage de la dynamique de marche, mises en oeuvre dans le deuxième dispositif (FBM-ECU) électronique de commande de frein, produisent la deuxième force d'actionnement également en fonction des signaux de capteur du au moins un capteur (24) de vitesse de rotation d'une roue, du au moins un capteur de taux de lacet, du au moins un capteur d'accélération transversale et du au moins un capteur (166) d'angle du volant, de manière à effectuer une régulation (ESC) de marche dynamique lors d'un freinage demandé par le deuxième dispositif (FBM-ECU) électronique de commande de frein.

4. Equipement électrique suivant la revendication 3, **caractérisé en ce que** les routines de dynamique de marche, mises en oeuvre dans le deuxième dispositif (FBM-ECU) électroniques de frein, comprennent aussi une routine de régulation de commande de la puissance d'entraînement d'une machine d'entraînement du véhicule.

5. Equipement électrique suivant l'une des revendications précédentes, **caractérisé en ce que** le dispositif (164) capteur entre les signaux de capteur directement dans le deuxième dispositif (FBM-ECU) électronique de commande de frein.

6. Equipement électrique suivant l'une des revendications précédentes, **caractérisé en ce qu'**au moins un capteur du dispositif (164) capteur est présent en double, dans lequel un premier capteur, du capteur présent en double, entre les signaux de capteur dans le premier dispositif (EBS-ECU) électronique de commande de frein et un deuxième capteur, du capteur présent en double, entre les signaux de capteur dans le deuxième dispositif (FBM-ECU) électronique de commande de frein.

7. Equipement électrique suivant l'une des revendications précédentes, **caractérisé en ce qu'**il comprend un dispositif (70) d'autopilotage ou un système d'assistance au conducteur, qui entre directement ou indirectement, dans le deuxième dispositif (FBM-ECU) électronique de commande de frein, un signal de demande de braquage déclenchant un braquage demandé indépendamment par une demande de braquage du conducteur, dans lequel le signal de demande de frein et/ou le signal de demande de braquage est / sont produits en fonction des conditions de marche.

8. Equipement électrique suivant l'une des revendications précédentes, **caractérisé en ce qu'**il comporte un dispositif (26) électromécanique de direction avec ou sans liaison mécanique continue entre un volant (28) et un mécanisme (30) de direction, ainsi que comprenant un dispositif (162) électronique de commande de direction et un régleur (72) électrique de direction, dans lequel le dispositif (162) électronique de commande de direction reçoit un signal de demande de direction et, en fonction du signal de demande de direction, actionne le régleur (72) électrique de direction pour la direction du véhicule.

9. Equipement électrique suivant la revendication 8, **caractérisé en ce que**, dans le deuxième dispositif (FBM-ECU) électronique de commande de frein, sont mises en oeuvre des routines de commande de direction, qui produisent, en fonction d'une demande de direction par le dispositif (70) d'autopilotage, par le système d'assistance au conducteur ou par un actionnement d'un volant par le conducteur, le signal de demande de direction et l'entre dans le régleur (72) électrique de direction.

10. Equipement électrique suivant l'une des revendications précédentes, **caractérisé en ce qu'**il est prévu une électronique (168) d'analyse, qui coopère avec le dispositif (164) capteur et qui, à partir des signaux de capteur donnés par le dispositif (164) capteur, forme des signaux de capteur, qui peuvent être utilisés dans un bus de données, et les entre dans un bus (122) de données raccordé, auquel est raccordé également au moins le deuxième dispositif (FBM-ECU) électronique de commande de frein.

11. Equipement électrique suivant les revendications 7, 8 ou 9 et 10, **caractérisé en ce qu'**au bus (122) de données est raccordé au moins l'un de ce qui suit : un appareil (160) électronique de commande du dispositif (70) d'autopilotage et/ou un appareil électronique de commande du système d'assistance au conducteur, le premier dispositif (EBS-ECU) électronique de commande de frein et le deuxième dispositif (FBM-ECU) électronique de frein, le dispositif (162) électronique de commande de direction, l'électronique (168) d'analyse coopérant avec le dispositif (162) capteur, ainsi qu'un appareil (170) de commande de moteur d'une machine d'entraînement du véhicule.

12. Equipement électrique suivant l'une des revendications précédentes, **caractérisé en ce que** le dispositif (124) électropneumatique de frein de service est alimenté en énergie électrique par une première source (126) d'énergie électrique ou par un premier circuit d'alimentation en énergie, qui est indépendant d'une deuxième source (128) d'énergie électrique ou d'un deuxième circuit d'alimentation en énergie, qui alimente en énergie électrique le dispositif (1) électropneumatique de vanne de frein de service et le dispositif capteur.

13. Equipement électrique suivant les revendications 8 ou 9 et 12, **caractérisé** en ce le dispositif (26) électropneumatique de direction est alimenté en énergie électrique par la deuxième source (128) d'énergie électrique ou par le deuxième circuit d'alimentation en énergie.

14. Equipement électrique suivant l'une des revendications précédentes, **caractérisé** en ce le moyen (ECU, 52) de production de la deuxième force d'actionnement comporte au moins un actionneur (52) électrique, électrohydraulique ou électropneumatique, qui est commandé par des signaux électriques du deuxième dispositif (FBM-ECU) électronique de commande de frein.

15. Equipement électrique suivant la revendication 14, **caractérisé en ce que** moyen (ECU, 52) de production de la deuxième force d'actionnement comporte au moins un dispositif (52) d'électrovanne électropneumatique, qui, en fonction des signaux électriques sélectionnés par le deuxième dispositif (FBM-ECU) électronique de commande de frein, sélectionne au moins une pression pneumatique de commande, dont dépend la deuxième force d'actionnement.

16. Equipement électrique suivant la revendication 15, **caractérisé** en ce la au moins une pression de commande sélectionnée par le au moins un dispositif (52) d'électrovanne est mesurée au moyen d'un agencement de capteurs et est régulée par égalisation à une valeur de consigne dans le deuxième dispositif (FBM-ECU) électronique de frein, dans lequel l'agencement de capteurs et le dispositif (52) d'électrovanne forment, ensemble avec le deuxième dispositif (FBM-ECU) électronique de commande de frein, un régleur de pression de la pression de commande pour la régulation de la pression de commande pneumatique.

17. Equipement électrique suivant la revendication 16 ou 17, **caractérisé en ce que** la pression de commande pneumatique peut être appliquée à au moins une chambre (22) de commande du dispositif (1) électropneumatique de vanne de frein de service, qui est délimitée par le au moins un piston (12) de commande, dans lequel la chambre (22) de commande est disposée, de manière à provoquer, lorsqu'elle est alimentée en air, sur le au moins un piston (12) de commande, une deuxième force d'actionnement de même sens que la première force d'actionnement ou de sens contraire.

18. Véhicule ayant un équipement électrique suivant l'une des revendications précédentes.
